(19) Europäisches Patentamt
European Patent Office
Office européen des brevets

(11) **EP 3 083 837 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(21) Anmeldenummer: **14812432.4**

(22) Anmeldetag: **08.12.2014**

(51) Int Cl.:
***C09C 1/36*** *(2006.01)*
***C09C 1/02*** *(2006.01)*
***C09C 1/06*** *(2006.01)*
***C08K 9/06*** *(2006.01)*
***C08J 3/22*** *(2006.01)*
***C09C 3/12*** *(2006.01)*
***C08J 5/18*** *(2006.01)*

(86) Internationale Anmeldenummer:
**PCT/EP2014/076817**

(87) Internationale Veröffentlichungsnummer:
**WO 2015/091041 (25.06.2015 Gazette 2015/25)**

# (54) OBERFLÄCHENBEHANDLUNG VON PARTIKELN UND DEREN VERWENDUNG

SURFACE TREATMENT OF PARTICLES AND THEIR USE

TRAITEMENT DE SURFACE DE PARTICULES ET UTILISATION DE CELLES-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2013 DE 102013226800**

(43) Veröffentlichungstag der Anmeldung:
**26.10.2016 Patentblatt 2016/43**

(73) Patentinhaber:
- **Evonik Degussa GmbH**
  **45128 Essen (DE)**
- **Venator Germany GmbH**
  **47198 Duisburg (DE)**

(72) Erfinder:
- **LEHMANN, Kathrin**
  **51377 Leverkusen (DE)**
- **HENNING, Frauke**
  **45259 Essen (DE)**
- **MUND, Christian**
  **45149 Essen (DE)**
- **ROHE, Bernd**
  **47445 Moers (DE)**
- **FRITZEN, Petra**
  **47443 Moers (DE)**
- **HOCKEN, Jörg**
  **40670 Meerbusch (DE)**

(56) Entgegenhaltungen:
**EP-A1- 0 141 174**
**EP-A2- 0 265 807**
**DE-A1-102008 031 901**
**GB-A- 1 348 372**
**HU-B- 216 858**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 083 837 B1

## Beschreibung

Gebiet der Erfindung:

Oberflächenbehandlung von Titandioxid-, Bariumsulfat-, Zinksulfid und/oder Lithopone-Partikeln, sowie Mischungen dieser Partikel mit speziellen alkoxylierten Siloxanen zur Dispersionsverbesserung in Kunststoffen.

Stand der Technik:

Kunststoffe, die zu entsprechenden Polymerzusammensetzungen formuliert werden, werden in die wesentlichen Gruppen der Thermoplaste und Duromere unterteilt.

Dabei bezeichnet man solche Polymere, die oberhalb der Gebrauchstemperatur einen Fließübergangsbereich besitzen als Thermoplaste. Thermoplaste sind lineare oder verzweigte Polymere, die im Falle amorpher Thermoplaste oberhalb der Glasübergangstemperatur (Tg), im Falle (teil)kristalliner Thermoplaste oberhalb der Schmelztemperatur (Tm) prinzipiell fließfähig werden. Sie können im erweichten Zustand durch Pressen, Extrudieren, Spritzgießen oder andere Formgebungsverfahren zu Formteilen verarbeitet werden. Die Kettenbeweglichkeit wird dabei so groß, dass die Polymermoleküle leicht aneinander abgleiten und der Werkstoff den schmelzflüssigen Zustand erreicht (Fließbereich, Polymerschmelze). Zu den Thermoplasten gehören weiterhin auch thermoplastisch verarbeitbare Kunststoffe mit ausgeprägten entropieelastischen Eigenschaften, die sogenannten thermoplastischen Elastomeren. Zu den Thermoplasten gehören alle aus linearen oder thermolabil vernetzten Polymermoleküle bestehenden Kunststoffe, zum Beispiel Polyolefine, Vinylpolymere, Polyester, Polyacetale, Polyacetatae, Polycarbonate, zum Teil auch Polyurethane und Ionomere aber auch TPEs - thermoplastische Elastomere (RÖMPP ONLINE, Vers. 3.7, Carlowitz u. Wierer, Kunststoffe (Merkblätter), 1. Kapitel Thermoplaste, Berlin: Springer Verlag (1987), Domininghaus, S. 95 ff).

Duromere sind Kunststoffe, die durch irreversible und engmaschige Vernetzung über kovalente Bindungen aus Oligomeren (technisch: Prepolymeren), seltener aus Monomeren oder Polymeren entstehen. Der Begriff "Duromer" wird dabei sowohl für die Rohstoffe vor der Vernetzung (siehe Reaktionsharze) als auch als Sammelbezeichnung für die ausgehärteten, zumeist vollständig amorphen Harze verwendet. Duromere sind bei niedrigen Temperaturen stahlelastisch, und auch bei höheren Temperaturen können sie nicht viskos fließen, sondern verhalten sich bei sehr begrenzter Deformierbarkeit elastisch. Zu den Duromeren gehören unter anderem die technisch wichtigen Stoffgruppen der Diallylphthalat-Harze (DAP), Epoxidharze (EP), Harnstoff-Formaldehyd-Harze (UF), Melamin-Formaldehyd-Harze (MF), Melamin-Phenol-Formaldehyd-Harze (MPF), Phenol-Formaldehyd-Harze und ungesättigten Polyesterharze (UPES) (RÖMPP ONLINE, Vers. 3.7, Becker, G. W.; Braun, D.; Woebcken, W., Kunststoff-Handbuch, Band 10: Duroplaste, 2. Aufl.; Hanser: München,(1988); Elias (6.) 1, 7, 476 ff.).

Gilbert (Gilbert, Varshney, van Soom und Schiller, "Plate-out in PVC Extrusion - I. Analysis of plate-out", Journal of Vinyl and Additive Technology, (14) 1, 2008, 3-9) beschreibt die Verwendung von Ca-stearat oder anderen Seifen oder die entsprechenden Carbonsäuren wie Stearinsäure, um eine Oberflächenbehandlung von Titandioxid oder Bariumsulfat oder seinen Mischungen zu realisieren. Nach dieser Methodik können unerwünschte Nebeneffekte entstehen, da derartige Produkte häufig in großtechnischen Prozessen bei der Pigmentherstellung entweder nicht einfach zu verwenden sind oder auch zu sogenanntem Plate out bei der Produktion von hochgefüllten Masterbatchen, also Pigmentkonzentraten der Pigmente in einer thermoplastischen Matrix führen. Man versteht darunter das Aufbrennen der thermoplastischen Pigmentmischung auf der Schnecke oder des Inneren des Gehäuses der Extrusionsstrecke. Dies verursacht aufwendige Reinigung besonders bei Farbwechseln. Darüber hinaus können sich jederzeit derartig aufgebrannte Schichten lösen und führen zur Stippenbildung im Masterbatch und später auch in der Endapplikation also z.B. zu Stippen in dünnschichtigen Folien.

Weiterhin ist aus GB 1 288 581 die Verwendung von Siliconölen unterschiedlicher Kettenlänge/Viskosität bekannt, die man entweder beim Vermahlen des Pigmentes aufsprüht oder als Emulsion in eine Pigmentslurry eintragen kann. Pigmente mit Siliconöloberflächenbehandlung weisen zwar eine gute Hydrophobie auf und sind wegen ihrer niedrigen Oberflächenenergie im Allgemeinen dafür bekannt, dass sie leicht in eine niedrigenergetische Kunststoffumgebung eingebracht werden können. Derartig behandelte Pigmente weisen verschiedene Nachteile auf:

1. Silikonölbehandelte Partikel weisen eine starke Staubneigung auf. Obwohl z.B. Titandioxid mit einer relativ hohen Dichte von 3,9 g/cm$^3$ dazu nicht unbedingt neigen sollte, ist die starke Staubneigung nach Silikonölbehandlung aus US 3,649,321 bekannt. Die Staubneigung ist bei der Weiterverarbeitung sehr problematisch und gegebenenfalls sogar sicherheitsrelevant.

2. Eine niedrige Schüttdichte der silikonölbehandelten Pigmente führt zu Problemen bei der Abpackung des Pigmentes in Sackware, Big Bags oder Silo. Eine hohe Luftmenge erfordert die Befüllung mit einer niedrigeren Masse pro Packungseinheit. Wenn die Sackware nicht flach auf einer Palette stapelbar ist, erhöht sich der Umreifungsaufwand oder Aufwand bei Umfolierung der Paletten. Automatische Abpackung mit Luftförderung, welche als Standard mit hoher Leistung anzusehen ist, weist dieses Problem insbesondere auf.

Siliconöle als Oberflächenbehandlung können jedoch zu weiteren Problemen bei der Herstellung von Gebrauchsgegenständen führen, z.B. mangelnde Überlackierbarkeit, Bedruckbarkeit und/oder Verschweißbarkeit von Folien, insbesondere kann es in Multischichtfolien bis zur Delaminierung von Schichten und zum Funktionsverlust kommen (Plastics Additives: Advanced Industrial Analysis, 2006, Jan C. J. Bart, Seite 419 - 420; IOC Press, Niederlande, ISBN 1-58603-533-9; Broschüre Trouble Shouting Guide-Siegwerk, März 2013).

Aus DE 41 40 793, EP 0 546 407, EP 0 546 406 ist bekannt, dass Silikonöle oder silanbasierte Strukturen wie Methacryloxypropyltrimethoxysilan dazu geeignet sind, auch oxidische Oberflächen zu belegen, um so über eine Hydrophobierung bzw. Funktionalisierung der Oberfläche und eine Reduzierung der Viskosität, höhere Kompatibilität mit dem umgebenden organischen Medium und somit eine höhere Effizienz der eingesetzten Pigmente zu ermöglichen. Silane sind hydrolyseempfindlich und bedürfen im Allgemeinen einer erhöhten Temperatur von etwa 80°C um die Silylfunktionalität an der Pigment- oder Füllstoffoberfläche zu aktivieren und eine polymere Struktur auf der Oberfläche auszubilden. Viele Prozesse in der Pigmentherstellung sind wässrige Slurryprozesse oder die Pigmente wie Titandioxid entstehen durch Fällungsreaktionen in Wasser, so dass Bedarf besteht Oberflächenbehandlungsmittel in wässriger Form, z.B. emulgiert, in einfacher Form in den Prozess einbringen zu können. Andererseits gibt es den Bedarf in Prozessen, in denen es zur Oberflächenbehandlung von trockenen Pigmenten oder Füllstoffen kommt, dass in diesen Prozessen nicht automatisch eine Möglichkeit besteht oder zusätzliche Kosten verursacht, dort die Temperatur signifikant über die Umgebungstemperatur zu erhöhen, was für die Anbindung von Silanen ein Prozessnachteil ist, denn dafür sind Temperaturen oberhalb von 80°C für die Abspaltung des Alkohols erforderlich. Deshalb bestand der Bedarf eine Oberflächenbehandlung für trockene Vermahl- oder Mischprozesse zur Verfügung zu stellen, die gegebenenfalls auch ohne Temperaturerhöhung die Oberflächenmodifikation garantiert. Weiterhin wäre es vorteilhaft ein Verfahren zu verwenden, in dem kein Alkohol abgespalten wird, um teuren Explosionsschutz bei den Vermahl- und/oder Trocknungsverfahren zu vermeiden. Aus EP 0 141 174 A1, HU 216 858 B, EP 0 265 807 A2 und GB 1348 372 A ist bekannt, Polysiloxane, weitere Silikonöle, Polyoxyalkylen-Polysiloxan-Blockmischpolymerisate als Oberflächenmodifizierungsreagentien einzusetzen.

Die Dispergierung von hydrophilen anorganischen Pigmenten wie Titandioxid, Bariumsulfat, Zinksulfid und/oder Lithopone, die eine Vielzahl von Hydroxygruppen (HO-) und/oder Thiolgruppen (HS-) an der Oberfläche aufweisen, stellt ein Problem dar.

Entweder muss großer Aufwand durch lange Dispergierzeiten in Kauf genommen werden oder es resultiert eine ungenügende Dispergierung mit einem nicht akzeptablen Fehlerbild des Endgutes. Derartige Fehlerbilder können sein: Stippenbildung in Kunststoff-Folien, die nicht nur ästhetischer Natur sind, sondern bis zur Lochbildung und damit Undichtigkeiten in der Verpackung führen können, Stippen im gespritzten Kunststoffteil können zu mechanischen Defekten führen also eine deutlich geringere Zugfestigkeit oder Schlagzähigkeit bewirken und damit zu einer hohen Ausschussrate in der Spritzgussproduktion oder sogar zu Versagen von sicherheitsrelevanten Bauteilen aus Kunststoff im Automobil oder Elektronikbereich.

Oberflächenbehandelte Partikel, die in Kunststoffverpackungen mit Lebensmitteltauglichkeit eingesetzt werden sollen, unterliegen der europäischen Norm EC 10/2011 und/oder Normen der amerikanischen FDA.

Aufgabe der Erfindung war es daher die Oberflächen von Titandioxid-, Bariumsulfat-, Zinksulfidpartikeln und/oder Lithoponepartikeln zur Senkung der Staubneigung entsprechend zu behandeln.

Beschreibung der Erfindung:

Überraschenderweise wurde gefunden, dass spezielle Polyether modifizierte Siloxane wie in den Ansprüchen beschrieben die Aufgabe lösen.

Gegenstand der vorliegenden Erfindung sind daher oberflächenbehandelte $TiO_2$, $BaSO_4$, ZnS und/oder Lithopone - Partikel erhältlich nach einem Verfahren zur Oberflächenbehandlung von Primärpartikeln dadurch gekennzeichnet, dass die Primärpartikel bei der Behandlung mit mindestens einer Verbindung der Formel (I)

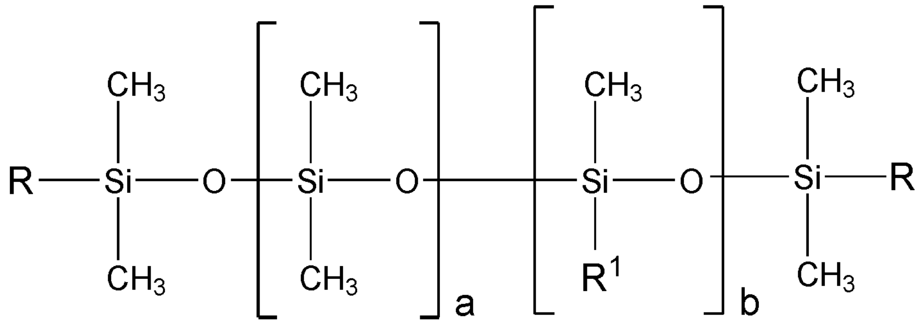

(I)

mit

R gleich oder verschieden $R^1$, Methyl oder Hydroxy, bevorzugt Methyl,
$R^1$ gleich oder verschieden einem Polyetherrest der Formel (III)

$$-Z-(O-C_mH_{2m-(n-1)})_o-[O-(AO)-R^3]_n \quad (III)$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,

und mit der Maßgabe, dass in $R^1$ die Summe aus Kohlenstoff- und Sauerstoffatomen mindestens 70 ist,
a 20 bis 200, bevorzugt von 30, von 40, von 50, von 60 bis 170, bis 160, bis 150, bis 140, bis 130, bis 120, bis 110 und insbesondere bevorzugt 70 bis 100,
b 1 bis 50, bevorzugt von 2, von 3, von 4 bis 30, bis 25, bis 20 und insbesondere bevorzugt 5 bis 15,
mit der Maßgabe, dass wenn keiner der Reste R gleich $R^1$ ist, b mindestens 3 ist,
in Kontakt gebracht werden, wobei die Verbindungen der Formel (I) mit einem Anteil von 0,01 bis 2 Gew.-%, bevorzugt 0,05 bis 1 Gew.-%, mehr bevorzugt 0,1 bis 0,8 Gew.-%, weiter mehr bevorzugt 0,2 bis 0,6 Gew.-% und insbesondere bevorzugt 0,3 bis 0,5 Gew.-% bezogen auf die Masse der zu behandelnden Primärpartikel eingesetzt werden.

Bevorzugt weist der Oxyalkylenrest AO bis zu 50 Gew.-% Oxyethylengruppen, mehr bevorzugt bis zu 40 Gew.-%, besonders bevorzugt bis zu 35, 30, 25, 20, 15, 10 Gew.-%, insbesondere bevorzugt bis zu 5 Gew.-%. Bevorzugt weist der Oxyalkylenrest AO 0 Gew.-%, mehr bevorzugt mindestens 5, 10, 15, 20, 25, 30 Gew.-% und insbesondere mindestens 35 Gew.-% Oxyethylengruppen auf. Der Oxyethylengehalt ist hierbei bezogen auf die Gesamtmasse des Restes $R^1$.

Bevorzugt weist der Oxyalkylenrest AO von 0 bis zu 50 Gew.-%, bevorzugt von 5 bis zu 35 Gew.-%, mehr bevorzugt von 15 bis 30 Gew.-% Oxyethylengruppen bezogen auf die Gesamtmasse des Restes $R^1$ auf.

Bei Anwesenheit von Oxybutylengruppen ist der molare Anteil von Oxybutylengruppen bezogen auf die Summe aus Oxypropylen- und Oxybutylengruppen bevorzugt maximal 50%, bevorzugt bis zu 45, 40, 35, 30, 25, 20, 15, 10 und insbesondere bis zu 5%.

Bevorzugt ist der numerische Anteil unmodifizierter Siloxanfragmente mit dem Index a bis zu 20 mal so groß wie der Anteil mit Polyether modifizierten Siloxanfragmente mit dem Index b, bevorzugt bis zu 20 mal, bis zu 19, bis zu 18, bis zu 17, bis zu 16, bis zu 15, bis zu 14, bis zu 13, bis zu 12, bis zu 11, bis zu 10, bis zu 9 und insbesondere bevorzugt bis zu 8 mal. Bevorzugt ist der Index a mindestens 7 mal dem Index b, mehr bevorzugt mindestens 8 mal, 9 mal, 10 mal, 11 mal und insbesondere mindestens 12 mal dem Index b.

Bevorzugt ist das numerische Verhältnis von Index a zu Index b gleich 8 bis 18, bevorzugt 9 bis 15 und insbesondere bevorzugt 10 bis 12.

Bevorzugt ist der Index o gleich null.

Bevorzugt ist das Fragment mit dem Index o ein unverzweigter Rest, mehr bevorzugt ein unverzweigter Rest

mit 3 Kohlenstoffatomen. Besonders bevorzugt ist das Fragment mit dem Index o ein Glycerylrest, insbesondere bevorzugt ein n-Glycerylrest, der terminal die Gruppe -O-Z trägt.

Bevorzugt ist der Rest Z ein linearer Propylenrest.

Bevorzugt ist der Rest $R^3$ ein Wasserstoff.

Bevorzugt werden die erfindungsgemäßen Partikel durch Oberflächenbehandlung mit Verbindungen der Formel (I) erhalten, indem

$R^1$ gleich oder verschieden ein $-(CH_2)_p-O-EO_x-PO_y-BO_z-R^3$,

mit der Maßgabe, dass in $R^1$ die Summe aus Kohlenstoff- und Sauerstoffatomen mindestens 70 ist,

EO Oxyethylen,

PO Oxypropylen,

BO Oxybutylen

x 0 bis 20, bevorzugt 3 bis 15, insbesondere bevorzugt 4 bis 10,

y 5 bis 100, bevorzugt 8 bis 50, insbesondere bevorzugt 10 bis 30,

z 0 bis 20,

p gleich 2 bis 4, bevorzugt 2 und/oder 3,

Bevorzugt ist der Index x kleiner oder gleich 1,2 bevorzugt kleiner 1,1, mehr bevorzugt kleiner 1, kleiner 0,9, kleiner 0,8, kleiner 0,7, kleiner 0,6, kleiner 0,5, kleiner 0,4, kleiner 0,3 und insbesondere kleiner 0,2 ist..

Bevorzugt ist der Index x zwischen 0,05 und 1,2 mal der Summe der Indices (y + z), bevorzugt zwischen 0,07 und 0,8 mal, insbesondere zwischen 0,1 und 0,5 mal.

Weiterhin bevorzugt ist, dass der Index z kleiner oder gleich dem Index y, bevorzugt kleiner oder gleich der Hälfte, dem Drittel, dem Viertel, dem Fünftel, dem Sechstel, dem Siebtel, dem Achtel, dem Neuntel und insbesondere kleiner oder gleich dem Zehntel des Indexes y ist.

Bevorzugt ist eine Oxybutylengruppe linear, also $-(CH_2)_4-O-$ und/oder verzweigt, also $-CH(CH_2CH_3)CH_2-O-$.

Besonders bevorzugt sind Partikel, die mit einem Polyethersiloxan der Formel (I) oberflächenbehandelt sind, wobei der Rest R gleich Methyl und der Rest $R^3$ in Formel (III) gleich Wasserstoff, sowie die Indices

a 80 bis 95,
b 5 bis 8,
x 3 bis 5,
y 10 bis 25 und
z 0

sind.

Polyethersiloxane im Sinne der Erfindung sind Verbindungen der Formel (I).

Die Fragmente der Formeln (I), (II), (III), sowie der Fragmente AO und $R^1$ können statistisch aufgebaut sein.

Statistische Verteilungen sind blockweise aufgebaut mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein Vorteil der erfindungsgemäß oberflächenbehandelten Partikel ist die verringerte Staubneigung gegenüber Pigmenten des Standes der Technik, die z.B. mit Silikonöl behandelt wurden. Somit werden bei der Weiterverarbeitung Emissionen von Staub verringert. Weiterhin werden eventuelle Staubexplosionen verhindert.

Ein weiterer Vorteil der erfindungsgemäßen Partikel ist, dass sie nach derzeitigen Regularien, wie der europäischen Norm EC 10/2011 und/oder Normen der amerikanischen FDA, hinsichtlich ihrer Verwendung in Lebensmittelverpackungen keiner Einschränkung unterliegen.

Ein weiterer Vorteil der erfindungsgemäßen Partikel und erfindungsgemäßen Zusammensetzungen ist, dass die Druckfilterwerte gegenüber dem Stand der Technik erniedrigt werden. Dies steigert die Standzeiten der verarbeitenden Geräte, insbesondere der Extruder und verringert deren Reinigungszyklen.

Weiterhin vorteilhaft ist eine gute Dispergierung zur Vermeidung von Faserbrüchen und/oder Stippen der Produkte.

Ebenfalls vorteilhaft ist die hohe Temperaturbeständigkeit der erfindungsgemäßen Partikel und der erfindungsgemäßen Zusammensetzungen.

Vorteilhaft sind die erfindungsgemäßen Zusammensetzungen gegenüber dem Stand der Technik, da eine deutliche Erhöhung der Zugfestigkeit und der Schlagzähigkeit für Kunststoffformkörper zu beobachten ist.

Ein weiterer Vorteil der erfindungsgemäßen Partikel ist ihre Pulverfließfähigkeit, die sich besonders bei der Entladung von Big Bags und Silofahrzeugen bei der Weiterverarbeitung der Partikel oder bei der direkten Verwendung

der Partikel bei der Zudosierung über pneumatische Systeme und Pulverschnecken in das Verarbeitungsaggregat (z.B. Extruder oder Kneter) niederschlägt.

Ein weiterer Vorteil der erfindungsgemäßen Partikel ist, dass Zusammensetzungen vielseitig formuliert werden können. Dies äußert sich darin, dass die Zusammensetzungen auf Basis von Thermoplasten, Duromeren und Weichmachern formuliert werden können. Dies bedeutet für die weiterverarbeitende Industrie, wie z.B. Pastenhersteller, Compoundeure und Masterbatcher den Vorteil, dass die erfindungsgemäßen Partikel ohne weitere Anpassungen verwendet werden können. Dies generiert einen finanziellen Vorteil und Formulierungsflexibilität.

Zur Erzeugung der erfindungsgemäßen Partikel sind alle Kristallformen des Titandioxids, Bariumsulfats und Zinksulfids als Primärpartikel geeignet.

Im Falle des Titandioxids sind dies z.B. polymorphe Formen, Rutil, Anatas oder Brookit. Das Titandioxid kann auf verschiedene im Stand der Technik bekannte Methoden hergestellt werden. Erfindungsgemäß können auch verschiedene hydratisierte Formen des Titandioxids zum Einsatz kommen. Als Weißpigment ist Titandioxid unter der Bezeichnung E171 gemäß Lebensmittelzusatzverordnung 231/2012/EC zugelassen, sowie unter der Bezeichnung CI 77891 nach der Kosmetikverordnung EG 1223/2009. Bariumsulfat wird erfindungsgemäß eingesetzt unter den Bezeichnungen Schwerspat, Baryt, Barytweiß und Blanc fixe. Erfindungsgemäß werden die unterschiedlichen Kristallformen des Zinksulfides eingesetzt, das alpha-Zinksulfid, in der Natur bekannt als Wurtzit und/oder das beta-Zinksulfid, in der Natur als Zinkblende und Sphalerit bekannt.

Weiterhin können Mischungen der genannten Pigmente erfindungsgemäß oberflächenbehandelt werden. Die Mischungen können durch Vermischen der zuvor in Reinform hergestellten Pigmente oder durch Co-Fällung erfolgen, insbesondere in der Form von Lithopone. Diese Mischungen stellen im Sinne der Erfindung ebenfalls Primärpartikel dar.

In einer bevorzugten Ausführungsform wird anorganisch modifiziertes Titandioxid verwendet. Zur Behandlung der Oberfläche wird der $TiO_2$-Grundkörper aufgemahlen und danach mit einer oder mehreren Schichten von anorganischen Substanzen belegt. Dabei wird die auszufällende Substanz zunächst in gelöster Form zugegeben. Dazu ist es notwendig, in der Suspension einen pH-Wert einzustellen, bei dem die anorganische Substanz noch nicht als Feststoff ausfällt. Aus dieser Suspension wird dann durch eine pH-Wert-Veränderung zum Neutralpunkt hin die anorganische Substanz ausgefällt. Bei dieser Behandlung finden die Oxide bzw. Hydroxide des Aluminiums, des Siliziums, des Zirkons und auch des Titans Verwendung (J. Winkler, Titandioxid, (2003), Kap 3.4, S. 38-41, ISBN 3-87870-738-X). Nach dieser Behandlung ist die Oberfläche der Titandioxidpartikel entsprechend modifiziert, so dass die Partikel zu höchstens 99 Gew.-% aus Titandioxid bestehen, bevorzugt zu höchstens 95 Gew.-% insbesondere bevorzugt zu höchstens 85 Gew.-% bezogen auf die Gesamtmasse des Partikels. Weiterhin bevorzugt bestehen die Partikel zu mindestens 80 Gew.-%, bevorzugt zu mindestens 85 Gew.-%, besonders bevorzugt zu mindestens 90 Gew.-% aus Titandioxid bezogen auf die Gesamtmasse der Partikel. Die so anorganisch behandelten Titandioxidpartikel sind im Sinne der Erfindung ebenfalls Primärpartikel.

Bevorzugte Partikel sind Titandioxidpartikel, optional anorganisch modifiziert.

Bevorzugt wird durch die erfindungsgemäße Oberflächenbehandlung die Packungsdichte der Partikel erhöht, die dann in einer reduzierten Schüttdichte ersichtlich wird und auch einer verbesserten Fließfähigkeit.

Bevorzugt weisen die erfindungsgemäß oberflächenbehandelten Partikel eine verminderte Staubneigung auf. Besonders bevorzugt ist die Staubneigung gegenüber silikonbehandelten Partikeln um mindestens 13%, bevorzugt 21%, mehr bevorzugt 25% und insbesondere bevorzugt mindestens 30% verringert.

Die Staubneigung kann in einer sogenannten Staubkammer ermittelt werden. Hierbei wird eine definierte Partikelmenge, z.B. 100g, in einem Fallrohr dem freien Fall in der Atmosphäre der Umgebung ausgesetzt. Die Partikel sedimentieren in der Atmosphäre am Boden eines Zylinders und ein Teil verbleibt als Staub in der Gasphase des Fallvolumens. Das über dem Sediment stehende Volumen wird abgesaugt und dabei der enthaltene Staub abfiltriert. Durch Wägen des Filters wird die Staubmenge bestimmt.

Bevorzugt weisen die erfindungsgemäßen Partikel eine Staubmasse von weniger als 80 mg/100g auf, besonders bevorzugt von weniger als 65 mg/100g und insbesondere bevorzugt von weniger als 50 mg/100g auf.

Die Pulverfließfähigkeit kann mit einem z.B. Ringschergerät RST -XS erfolgen (D. Schulze, Pulver und Schüttgüter, Springer, 2006, Kapitel 3.1.4, Seite 42). Die Schüttgutprobe wird dazu in einer Meßzelle von oben mit einer Kraft (Normalkraft) von 3,5 kPa belastet. Während der Messung rotiert die Scherzelle langsam ($\omega$). Es entsteht eine Scherverformung der Schüttgutprobe. Die benötigte Kraft ($F_1$ und $F_2$) wird gemessen. Aus dem Verhältnis von Verfestigungsspannung $\sigma_1$ zu Schüttgutfestigkeit $\sigma_c$ wird die Fließfähigkeit $ff_c$ des Schüttgutes bestimmt. Je größer die Fließfähigkeit $ff_c$ ist, desto besser fließt das Schüttgut.

Bevorzugt weisen die erfindungsgemäßen Partikel eine Pulverfließfähigkeit von größer 1,5 auf. Die Bestimmung der Pulverfließfähigkeit kann analog ASTM D6773-08 bestimmt werden.

Die Dispergierbarkeit der erfindungsgemäß oberflächenbehandelten Partikel kann anhand des Druckanstieges vor einem Filter (mit anzugebender Maschenweite), der beim Extrudieren einer Polymerschmelze über ein Siebpaket entsteht, bestimmt und bewertet werden (Druckfilterwert). Die Prüfung kann z.B. in Anlehnung an die DIN EN 13900-5:2005 durchgeführt werden.

Bevorzugt weisen die erfindungsgemäßen Zusammensetzungen in Form von Masterbatches einen Druckfilterwert (14$\mu$m) von bis zu 1,2 bar * $cm^2$ / g, mehr bevorzugt von bis zu 1,0 bar * $cm^2$ / g und insbesondere von bis zu 0,8 bar * $cm^2$ / g auf. Die Druckfilterwerte können dazu wie in den Beispielen beschrieben bestimmt werden.

Eine weitere Möglichkeit der Beurteilung der Dispergierbarkeit besteht in der Bestimmung und Bewertung der Anzahl von Agglomeraten in einer Flachfolie. Agglomerate sind dabei als Stippen erkennbar. Die Anzahl der Stippen sollte möglichst gering sein.

Eine weitere Möglichkeit der Beurteilung der Dispergierbarkeit besteht in der Bestimmung der Feinheit der erfindungsgemäßen Partikel z.B. in einer Weißpaste unter definierten Dispergierbedingungen. Hierzu ist zum Beispiel ein Grindometer zum Beispiel nach Hegman geeignet. Die Bestimmung kann z.B. nach DIN EN 21524 (entsprechend ISO 1525) durchgeführt werden. Die erfindungsgemäßen Partikel sollten möglichst fein sein, bevorzugt kleiner 20 $\mu$m, besonders bevorzugt kleiner 18 $\mu$m, insbesondere kleiner 16 $\mu$m, wobei die Partikel nicht kleiner als 0,1 $\mu$m, bevorzugt nicht kleiner als 1 $\mu$m sein sollten.

Ein weiterer Gegenstand der Erfindung ist die Verwendung der erfindungsgemäßen Partikel zur Herstellung von Polymerzusammensetzungen.

Bevorzugt werden die erfindungsgemäßen Partikel zur Herstellung von Zusammensetzungen verwendet.

Verwendung der Polymerzusammensetzungen, enthaltend die erfindungsgemäßen Partikel, zur Verarbeitung zu Kunststoffformkörpern oder-folien.

Ein weiterer Gegenstand der Erfindung sind Zusammensetzungen enthaltend mindestens ein Polymer und mindestens erfindungsgemäße Partikel.

Die erfindungsgemäßen Zusammensetzungen enthalten neben den erfindungsgemäßen Partikeln mindestens ein Polymer.

Bevorzugte Polymere der erfindungsgemäßen Zusammensetzungen sind Duromere oder Thermoplasten. Als Duromere sind beispielsweise ungesättigte Polyesterharze (UP), Phenolharze, Melaminharze, Formaldehyd-Formmassen, Vinylester-Harze, Diallylphthalat-Harze, Silikonharze oder Harnstoffharze geeignet. Als thermoplastische Materialien sind beispielsweise Polyethylen, Polypropylen, Polyester, Polyamid, PET, Polystyrol, dessen Copolymerisate und Blends, Polycarbonat, PMMA, oder Polyvinylchlorid geeignet.

Bevorzugt werden die thermoplasthaltigen erfindungsgemäßen Zusammensetzungen zu Masterbatchen und/oder Kunststofffolien verarbeitet.

Bevorzugt werden die Zusammensetzungen zu Masterbatchen, Kunststoffformkörpern und/oder Kunststofffolien verarbeitet.

Weiterhin bevorzugt werden die duromerhaltigen erfindungsgemäßen Zusammensetzungen zu Kunststoffformkörpern verarbeitet.

Weiterhin bevorzugt ist die Zugfestigkeit von erfindungsgemäßen Kunststoffformkörpern gegenüber dem Stand der Technik (enthaltend Silikonöl behandelte Partikel) um mindestens 10 % verbessert, also entsprechend erhöht. Weiterhin bevorzugt ist die Schlagzähigkeit gegenüber dem Stand der Technik (enthaltend Silikonöl behandelte Partikel) um mindestens 10 %, bevorzugt mindestens 15 %, insbesondere bevorzugt mindestens 20 % verbessert, also entsprechend erhöht.

Bevorzugt weisen die erfindungsgemäßen duromeren Kunststoffformkörper basierend auf Polyester eine Zugfestigkeit von mehr als 70 MPa auf.

Bevorzugt weisen die erfindungsgemäßen duromeren Kunststoffformkörper basierend auf Polyester eine Schlagzähigkeit von mehr als 50 kJ/$m^2$ auf.

Insbesondere bevorzugt weisen die erfindungsgemäßen Kunststoffformkörper basierend auf Polyester eine Verbesserung sowohl der Zugfestigkeit als auch der Schlagzähigkeit von mindestens 10 % auf, hierbei sind die Absolutwerte der Zugfestigkeit auf über 70 MPa und der Schlagzähigkeit auf über 50 kJ/$m^2$ verbessert worden.

Bevorzugt können Verarbeitungsprozesse der erfindungsgemäßen Zusammensetzungen im Temperaturbereich von 5 bis 300°C, besonders bevorzugt von 25 bis 250°C und insbesondere bevorzugt von 50 bis 200°C durchgeführt werden ohne die Eigenschaften nachteilig zu beeinflussen.

Grundsätzlich können die erfindungsgemäßen Partikel nach den Verfahren des Standes der Technik hergestellt werden, bevorzugt werden sie jedoch durch das nachfolgend beschriebene Verfahren hergestellt.

Ein weiterer Gegenstand der Erfindung ist ein Verfahren zur Oberflächenbehandlung von $TiO_2$, $BaSO_4$, ZnS und/oder Lithopone-Primärpartikeln, in dem die Primärpartikel bei der Behandlung mit mindestens einer Verbindung der Formel (I)

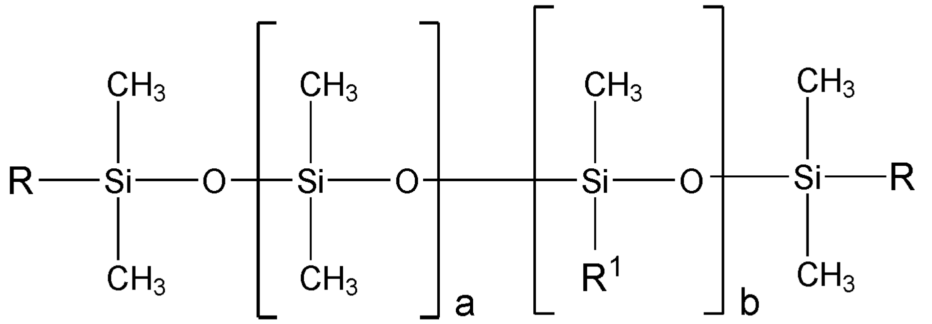

(I)

mit

R gleich oder verschieden $R^1$, Methyl oder Hydroxy, bevorzugt Methyl,
$R^1$ gleich oder verschieden einem Polyetherrest der Formel (III)

$$-Z-(O-C_mH_{2m-(n-1)})_o-[O-(AO)-R^3]_n \qquad \text{(III)}$$

mit

Z gleich einem verzweigten oder unverzweigten Alkylenrest mit 2 bis 4 Kohlenstoffatomen,
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,

und mit der Maßgabe, dass in $R^1$ die Summe aus Kohlenstoff- und Sauerstoffatomen mindestens 70 ist,
a 20 bis 200,
b 1 bis 50,
mit der Maßgabe, dass wenn keiner der Reste R gleich $R^1$ ist, b mindestens 3 ist,

in Kontakt gebracht werden, wobei die Verbindungen der Formel (I) mit einem Anteil von 0,01 bis 2 Gew.-%, bevorzugt 0,05 bis 1 Gew.-%, mehr bevorzugt 0,1 bis 0,8 Gew.-%, weiter mehr bevorzugt 0,2 bis 0,6 Gew.-% und insbesondere bevorzugt 0,3 bis 0,5 Gew.-% bezogen auf die Masse der zu behandelnden Primärpartikel eingesetzt werden.

Weitere Bevorzugungen bezüglich der Oberflächenbehandlungsmittel der Formel (I) sind bereits oben ausgeführt.

Die Oberflächenbehandlung der Primärpartikel kann trocken oder nass erfolgen, im Falle der nassen Ausführung, wird diese bevorzugt in Emulsion ausgeführt. Wird die Oberflächenbehandlung mit einem emulgierten Polyethersiloxan der Formel (I) durchgeführt, dann kann dies unter Zusatz von Emulgatoren erfolgen.

Bei der Zubereitung der Polyethersiloxane der Formel (I) als Emulsionen sind Öl- in-Wasser Emulsionen enthaltend 5 bis 70 Gew.-% Polyethersiloxane, 1 bis 20 Gew.-% Emulgatoren und 20 bis 94 Gew.-% Wasser bevorzugt. Verfahren zur Herstellung von Silikonemulsionen sind dem Fachmann bekannt. Üblicherweise erfolgt die Herstellung durch Verrühren aller Bestandteile und gegebenenfalls anschließendes Homogenisieren mit Strahldispergatoren, Rotor-Stator- oder Rotor-Rotor-Homogenisatoren, Kolloidmühlen oder Hochdruckhomogenisatoren. Methoden zur Emulsionserstellung werden z.B. in EP0093310, DE2555048, EP1132417 beschrieben.

Es können dabei alle Emulgatoren eingesetzt werden, die dem Fachmann zur Herstellung von Polysiloxan-Emulsionen bekannt sind, wie z.B. anionische, kationische, amphotere oder nichtionogene Emulgatoren.

Beispielhafte, jedoch nicht darauf beschränkte, anionische Emulgatoren sind: Alkylsulfate, insbesondere mit 8 bis 22 Kohlenstoffatomen in der Alkylgruppe, Alkyl- und Alkylarylethersulfate mit 8 bis 22 Kohlenstoffatomen in der Alkylgruppe und 1 bis 40 Oxyethylen- oder Oxypropylen-Einheiten. Sulfonate, insbesondere Alkylsulfonate mit 8 bis 22 Kohlenstoffatomen, Alkylarylsulfonate mit 8 bis 22 Kohlenstoffatomen, Mono- und Diester von SulfosuccinatenSalze von Carbonsäuren mit 8 bis 22 Kohlenstoffatomen in der Alkyl-, Aryl-, Alkaryl- oder Arylkyl-Einheit. Phosphorsäuremonoester und -diester und deren Salze, insbesondere Alkyl- und Alkarylphosphate mit 8 bis 22 Kohlenstoffatomen in der organischen Einheit, Alkylether- und Alkaryletherphosphate mit 8 bis 22 Kohlenstoffatomen in der Alkyl- oder Alkaryleinheit und 1 bis 40 Oxyethylen-Einheiten. Wie auf dem Gebiet der Emulgatoren wohl bekannt, können die Gegenionen im Falle von anionischen Emulgatoren Alkalimetallkationen, Ammonium oder protonierte substituierte Amine, wie die des Trimethylamins oder Triethanolamins, sein. Normalerweise sind Ammonium-, Natrium- und Kaliumionen bevorzugt.

Beispielhafte, jedoch nicht darauf beschränkte, kationische Emulgatoren sind: Salze von primären, sekundären und tertiären Fettaminen mit 8 bis 24 Kohlenstoffatomen mit Essigsäure, Schwefelsäure, Chlorwasserstoff und Phosphorsäuren. Quarternäre Alkyl- und Alkylphenylammoniumsalze, insbesondere jene, die 6 bis 24 Kohlenstoffatome besitzen, speziell deren Halogenide, Sulfate, Phosphate und Acetate. Alkylpyridinium-, Alkylimidazolinium- und Alkyloxazoliniumsalze, insbesondere diejenigen mit einer Alkylkette von bis zu 18 Kohlenstoffatomen, speziell deren Halogenide, Sulfate, Phosphate und Acetate.

Als amphotere Emulgatoren bieten sich an: Aminosäuren mit langkettigen Substituenten, wie z.B. N-Alkyldi(aminoethyl)glycin- oder N-alkyl-2-aminopropionsäurealze. Betaine, wie z.B. N-(3-acylamidopropyl)-N,N-dimethylammomiumsalze mit einem Acylradikal mit 8 bis 20 Kohlenstoffatomen.

Beispielhafte, jedoch nicht darauf beschränkte, nichtionogene Emulgatoren sind: Polyoxyethylenkondensate von Fettsäuren oder Fettalkoholen mit 8 bis 22 Kohlenstoffatomen mit bis zu 95 Gew.-% Oxyethylengehalt bezogen auf die Molmasse des Emulgators; Polyoxyethylenderivate von Phenolen mit 6 bis 20 Kohlenstoffatomen am Aromaten und bis zu 95 Prozent Oxyethylengehalt; Oxyethylenkondensate von Fettsäuremonoestern des Glycerins mit 10 bis 22 Kohlenstoffatomen und bis zu 95 Prozent Oxyethylen; Sorbitanester von Fettsäuren mit 10 bis 22 Kohlenstoffatomen; Polyoxyethylensorbitanester von Fettsäuren mit 10 bis 22 Kohlenstoffatomen; ethoxylierte Amide, exthoxylierte Amine, alkoxylierte Polysiloxane, Blockcopolymere von Propylen-, Ethylenoxid und/oder anderen Epoxiden.

Die obengenannten Fettstrukturen stellen üblicherweise den lipophilen Teil der Emulgatoren dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Bekannte gesättigte Gruppen sind Lauryl-, Stearyl-, Myristyl-, Palmitylreste. Alkylgruppen können dabei cyclisch, linear oder verzweigt sein.

Beim Emulgieren kann ein Emulgator oder eine Mischung mehrerer unterschiedlicher Emulgatoren eingesetzt werden, wobei bevorzugt mindestens ein nichtionogener Emulgator, wie z.B. ethoxylierte Fettsäuren, ethoxylierte lineare oder verzweigte Fettalkohole, Sorbitanfettsäureester oder ethoxylierte Sorbitanfettsäureester enthalten sein sollten.

Weiterhin können als Verdicker bekannte Verbindungen, wie Polyacrylsäure, Polyacrylate, Celluloseether, wie Carboxymethylcellulose und Hydroxyethylcellulose, natürliche Gume, wie Xanthan Gum, und Polyurethane sowie Konservierungsmittel und andere übliche und dem Fachmann bekannte Zusätze den Emulsionen zugesetzt werden.

Im erfindungsgemäßen Verfahren können die Partikel in einem einstufigen oder zweistufigen Verfahren oberflächenbehandelt werden. Im zweistufigen Verfahren werden die Primärpartikel in der ersten Stufe mit dem Polyethersiloxan der Formel(I) gemischt. Bevorzugt wird ein Lödigemischer verwendet.

Die erste Stufe wird bevorzugt bei Raumtemperatur oder Temperaturen bis zu 60°C durchgeführt.

In der zweiten Stufe werden die Partikel der ersten Stufe vermahlen. Bevorzugte Mühlen sind Dampfstrahlmühlen, Stiftmühlen, Luftstrahlmühlen, Walzenmühlen oder Kugelrohrmühlen, besonders bevorzugt ist eine Dampfstrahlmühle.

Die Vermahlung kann bei Normaldruck erfolgen oder bei erhöhtem Druck bis zu 20 bar, bevorzugt bis zu 19 bar, 18 bar, 17 bar, 16 bar, 15 bar, 14 bar, 13 bar, 12 bar, 11 bar, 10 bar, 9 bar, 8 bar, 7 bar, 6 bar, 5 bar, 4 bar, 3 bar oder bis zu 2 bar.

Bevorzugt werden die Partikel im zweiten Schritt des erfindungsgemäßen Verfahrens in einer Dampfstrahlmühle bei einem Druck von 8 bis 20 bar, bevorzugt 10 bis 19 bar, mehr bevorzugt 12 bis 18 bar vermahlen.

Die der Erfindung zugrunde liegenden Polyethersiloxane können durch edelmetallkatalysierte Hydrosilylierung der linearen oder verzweigten Wasserstoffsiloxane der Formel (II)

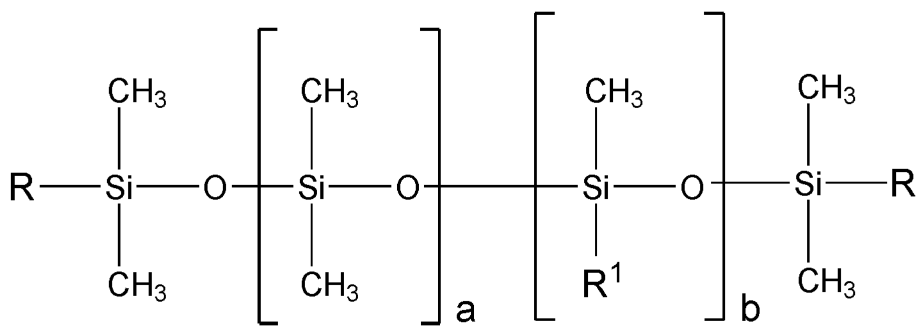

(II)

R gleich oder verschieden $R^1$, Methyl oder Hydroxy, bevorzugt Methyl,

$R^1$ gleich Wasserstoff

mit den oben genannten Definitionen der Reste und Indizes,
mit terminal ungesättigten Polyethern, wie beispielsweise in der EP1520870 beschrieben, hergestellt werden.

Die zu hydrosilylierenden Polyether genügen der Formel (IIIa)

$$Y\text{-}(O\text{-}C_mH_{2m-(n-1)})_o\text{-}[O\text{-}(AO)\text{-}R^3]_n \qquad \text{(IIIa)}$$

mit den obigen Definitionen und Bevorzugungen der Reste und Indices,
wobei der Rest Y terminal ungesättigt ist, bevorzugt mit einer C=C-Doppelbindung, weiter bevorzugt in Bezug auf den Sauerstoff allylisch ungesättigt, insbesondere ein Allylether.

In einer besonderen Ausführungsform können für die Darstellung der Polyether Startalkohole verwendet werden, die zu verzweigten Polyethern führen, die dann zwei oder mehr Oxyalkylenketten aufweisen. Startalkohole wären, Trimethylolpropanmonoallylether oder die Glycerinmonoallylether. Erfindungsgemäß bevorzugt sind Glycerinmonoallylether, insbesondere der terminal allylisch substituierte Glycerinmonoallylether.

Die bei der Herstellung der Polyethersiloxane verwendeten Wasserstoffsiloxane können wie im Stand der Technik, beispielsweise in der EP1439200 beschrieben, hergestellt werden. Die verwendeten ungesättigten Polyether können ausgehend von ungesättigten Startalkoholen nach den literaturbekannten Verfahren der alkalischen Alkoxylierung oder unter Verwendung von DMC-Katalysatoren wie im Stand der Technik hergestellt werden, wie beispielsweise in der DE102007057145 beschrieben.

Die erfindungsgemäßen Partikel, die erfindungsgemäßen Zusammensetzungen enthaltend die erfindungsgemäßen Partikel sowie die erfindungsgemäße Verwendung der Partikel und ihrer Zusammensetzungen und weiterhin das erfindungsgemäße Verfahren zur Herstellung der Partikel werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Kurze Beschreibung der Abbildungen:

Figur 1: Die Abbildung zeigt das Prinzip der Staubkammer, deren Funktionsweise in Beispiel 3 in E1 ausführlich beschrieben ist. Die Ziffern bedeuten: 1) Fallbox, 2) Entriegelungshebel, 3) Glaszylinder, 4) Schieber, 5) Dichtungsgummi, 6) Proberöhrchen (mit Quarzwatte gefüllt), 7) +9) Waschflasche (mit Quarzwatte gefüllt), 8) Vakuumpumpe, 10) Gasuhr, der Buchstabe G am Ausgang der Gasuhr bezeichnet den Ausgang für das abgesaugte Gas.

Figur 2: Die Abbildung zeigt das Prinzip der Messzelle des Ringschergeräts RST-XS, deren Funktionsweise in Beispiel 4 in E6 ausführlich beschrieben ist. $\omega$: Rotation der Messzelle, $F_1$ und $F_2$: Kräfte zum Zurückhalten des Deckels der Messzelle, $F_N$ Normalkraft des Deckels auf die Messzelle.

Beispiele:

*Allgemeine Methoden und Materialien*

| | | |
|---|---|---|
| Lupolen Purell 1800 SP 15 | Low density Polyethylen | Lyondell Basell |
| Palapreg P17-02 | Polyesterharz | DSM |
| Palapreg H814-01 | Polyesterharz | DSM |
| TEGOMER DA626 | | Evonik Industries AG |
| TEGOMER M-Si2650 | | Evonik Industries AG |

(fortgesetzt)

| | | |
|---|---|---|
| Lupolen Purell 1800 SP 15 | Low density Polyethylen | Lyondell Basell |
| Trigonox C | | AkzoNobel Polymers |
| Millicarb OG | | Omya |
| Coathylene HA 1681 | | DuPont |
| Dioctylphthalat (DOP) | | BASF |
| Methylisothiazolinon (MIT) | | Thor Chemie |

Viskosität:

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturabhängigkeit der Viskosität wurden die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 bis 100°C und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50% (+/- 20%) des maximal messbaren Drehmoments erfolgte, andernfalls musste eine passende Spindel verwendet werden. Das Ergebnis der Messung wurde am Display des Viskosimeters in mPas ausgegeben, wobei die Division durch die Dichte (g/ml) die Viskosität in der Einheit [$mm^2/s$] liefert.

Spektroskopische Analysen:

Die Aufnahme und Interpretation der NMR-Spektren ist dem Fachmann bekannt. Als Referenz sei das Buch "NMR Spectra of Polymers and Polymer Additives", A. Brandolini und D. Hills, 2000, Marcel Dekker, Inc. angeführt. Die Spektren wurden mit einem Bruker Spectrospin Spektrometer bei Raumtemperatur aufgenommen, die Messfrequenz betrug bei der Aufnahme der Protonenspektren 399,9 MHz, bei Aufnahme der $^{13}C$ Spektren 100,6 MHz bzw. bei Aufnahme der $^{29}Si$ Spektren 79,5 MHz.

Bestimmung der Molmassen, insbesondere der gewichtsmittleren Molmassen Mw:

Die gelpermeationschromatographischen Analysen (GPC) erfolgten mit einem Gerät Typ 1100 der Firma Hewlett-Packard unter Verwendung einer SDV-Säulenkombination (1000/10000 Å, je 65cm, Innendurchmesser 0,8 cm, Temperatur 30°C), THF als mobiler Phase mit einer Flussrate von 1ml/min und einem RI-Detektor (Hewlett-Packard). Die Kalibrierung des Systems erfolgte gegen einen Polystyrolstandard im Bereich von 162 bis 2.520.000 g/mol.

Bestimmung des SiH-Gehaltes:

Die Bestimmungen der SiH-Werte der eingesetzten Wasserstoffsiloxane aber auch die der Reaktionsmatrices erfolgen jeweils gasvolumetrisch durch die Natriumbutylat induzierte Zersetzung aliquot eingewogener Probemengen an einer Gasbürette. Eingesetzt in die allgemeine Gasgleichung gestatten die gemessenen Wasserstoffvolumina die Gehaltsbestimmung aktiver SiH-Funktionen in den Edukten aber auch in den Reaktionsansätzen und erlauben so die Umsatzkontrolle. Eingesetzt wurde eine 5 Gew.-% Natriumbutylatlösung.

*Beispiel 1: Synthese*

Die eingesetzten Polyether (Tabelle 1, PE) weisen an den Kettenenden jeweils eine Allylether- (PE1 - PE8) oder Vinyletherfunktion (PE9) und eine Hydroxygruppe (PE1 - PE9) auf und sind gekennzeichnet durch unterschiedliche Oxyethylen-, Oxypropylen- und Oxybutylen-Massenanteile (EO/PO/BO-Massenanteile, bezogen auf den Polyetherteil ohne Allyl-/Vinylgruppe) und Molmassen (Mw). Der Vinylpolyether PE9 weist einen Oxybutylenrest als Fragment mit dem Index o gemäß Formel (III) auf, in diesem Fall gleich $-O-(CH_2)_4-$.

Glycerinmonoallylether, der in dem Polyether PE10 und Trimethylolpropanmonoallylether, der in dem Polyether PE11 eingesetzt wurde.

Tabelle 1: Zusammensetzung der eingesetzten Polyether

| Polyether | PO, [Gew.%] | EO, [Gew.%] | BO, [Gew.%] | Mw [g/mol] |
|---|---|---|---|---|
| PE1 | 77 | 23 | | 1057 |
| PE2 | 80 | 20 | | 518 |
| PE3 | 100 | 0 | | 414 |
| PE4 | 68 | 32 | | 1417 |
| PE5 | 88 | 12 | | 1336 |
| PE6 | 72 | 28 | | 1219 |
| PE7 | 90 | 10 | | 1180 |
| PE8 | 80 | 10 | 10 | 1194 |
| PE9 | 83 | 10 | 7 | 1194 |
| PE10 | 90 | 10 | | 1248 |
| PE11 | 90 | 10 | | 1298 |

Die eingesetzten Wasserstoffsiloxane (Tabelle 2, SiH) sind gekennzeichnet durch unterschiedliche SiH-Gehalte und Viskositäten.

Tabelle 2: Eigenschaften der eingesetzten Wasserstoffsiloxane

| Wasserstoffsiloxan | SiH-Gehalt, [mmol/g] | Viskosität, 25°C, [mPa*s] |
|---|---|---|
| SH1 | 2,29 | 116 |
| SH2 | 0,90 | 159 |
| SH3 | 1,40 | 61 |
| SH4 | 3,52 | 101 |

Die polyethermodifizierten Siloxane (Tabelle 3, O) wurden mittels Hydrosilylierung nach folgendem Verfahren hergestellt.

In einem 500-ml-Vierhalskolben mit angeschlossenem KPG-Rührer, Rückflusskühler und Innenthermometer wurden das eingesetzte Wasserstoffsiloxan SiH und der eingesetzte hydroxyfunktionelle terminal ungesättigte PE im Verhältnis von 1,35 mol Allyl-/Vinylpolyether pro Moläquivalent SiH vorgelegt und unter Rühren auf 70°C erhitzt. Es wurden 5 ppm Platin in Form des $Pt_2$(divinyltetramethyl-disiloxan)$_3$-Komplexes (Karstedt-Katalysator, 1,5% Pt in Decamethylcyclopentasiloxan) mit einer Spritze hinzugegeben. Der gasvolumetrisch bestimmte Umsatz war innerhalb von 1 bis 3 Stunden Nachreaktionszeit bei 70-80°C quantitativ. Nach Filtration erhielt man gelbbräunliche, klare, viskose Flüssigkeiten.

Tabelle 3: Siloxane hergestellt nach Beispiel 1, die in O13 angeführte Mischung ist eine eqimolare Mischung der aufgeführten Polyether

| Beispiel | Wasserstoffsiloxan | Polyether |
|---|---|---|
| O1 | SH2 | PE1 |
| O2 | SH2 | PE5 |
| O3 | SH1 | PE1 |
| O4 | SH2 | PE3 |
| O5 | SH2 | PE6 |
| O6 | SH3 | PE1 |
| O7 | SH4 | PE2 |
| O8 | SH1 | PE2 |
| O9 | SH4 | PE3 |
| O10 | SH4 | PE1 |
| O11 | SH2 | PE4 |
| O12 | SH2 | PE7 |
| O13 | SH4 | PE1 + PE5 |

(fortgesetzt)

| Beispiel | Wasserstoffsiloxan | Polyether |
|---|---|---|
| O14 | SH2 | PE8 |
| O15 | SH2 | PE9 |
| O16 | SH2 | PE10 |
| O17 | SH2 | PE11 |

*Beispiel 2: Emulsionen*

In eine Emulgatorlösung aus 40 g einer ethoxylierten Stearinsäure mit einem HLB-Wert von ca. 18,8 und 60 g demineralisiertem Wasser wurden unter Scherung (Mizerscheibe, 2000 U/min) innerhalb von 20 Minuten 185 g O12 unter Kühlung zugegeben. Anschließend wurde noch 20 Minuten weiter geschert. Es entstand eine Paste mit erhöhter Viskosität. Danach wurden unter Scherung innerhalb von 10 Minuten 214 g demineralisiertes Wasser zugegeben. Man erhielt eine weiße Emulsion mit einem Festkörperanteil von ca. 45 Gew.-%. Zur Konservierung der Emulsion wurden am Ende 0,15 % einer wässrigen Lösung von 20 Gew.-% Methylisothiazolinon (MIT) zugegeben.

*Beispiel 3: Oberflächenbehandlung von Partikeln*

V1: Behandlung von $TiO_2$-Partikeln in Trocken-Phase

Ausgangsmaterial für die trockene Oberflächenbehandlung von Titandioxid mit Polyethersiloxanen war ein $TiO_2$ in Rutil-Modifikation mit einer anorganischen Modifizierung aus Siliziumoxid und Aluminiumoxid. Dieses Pulver wurde mit der in Tabelle 4 angegebenen Menge an Polyethersiloxan (Oberflächen Behandlungsmittel) versetzt und in einem Lödige-Mischer für 60 Sekunden homogenisiert. Danach wurde das mit Polyethersiloxan benetzte $TiO_2$ in einer Dampfstrahlmühle mit 18 bar Dampf trocken aufgemahlen. Alternativ kann die Aufmahlung mittels Stiftmühle, Luftstrahlmühle, Walzenmühle oder Kugelrohrmühle erfolgen.

V2: Behandlung von $TiO_2$-Partikeln in Nass-Phase

Ausgangsmaterial für die nasse Oberflächenbehandlung von $TiO_2$ mit Polyethersiloxanen war ein $TiO_2$-Filterkuchen nach der anorganischen Modifizierung, wobei das $TiO_2$ in der Rutil-Modifikation vorlag und die anorganische Modifizierung aus Siliziumdioxid und Aluminiumoxid bestand. Dieser Filterkuchen wurde mittels Dissolver in Wasser redispergiert und zur Suspension die in Tabelle 4 angegebene Menge an Polyethersiloxan-Emulsion nach Beispiel 2 zugegeben. Diese Suspension wurde sprühgetrocknet und danach das Sprühkorn mit Hilfe einer Dampfstrahlmühle mit 18 bar Dampf trocken aufgemahlen.

V3: Behandlung von $BaSO_4$-Partikeln in Trocken-Phase

Ausgangsmaterial für die trockene Oberflächenbehandlung von Bariumsulfat mit Polyethersiloxanen war ein nasschemisch gefälltes Bariumsulfat (sogenanntes *Blanc fixe*), welches noch nicht trocken-vermahlen, d.h. z. B. dampfstrahlgemahlen, wurde.

Dieses Pulver wurde mit der in Tabelle 4 angegebenen Menge an Polyethersiloxan versetzt und in einem Lödige-Mischer für 60 Sekunden homogenisiert. Danach wurde das mit Polyethersiloxan benetzte $BaSO_4$ in einer Dampfstrahlmühle mit 10 bar Dampf trocken aufgemahlen. Alternativ kann die Aufmahlung mittels Stiftmühle, Luftstrahlmühle, Walzenmühle oder Kugelrohrmühle erfolgen.

V4: Behandlung von ZnS-Partikeln in Trocken-Phase

Ausgangsmaterial für die trockene Oberflächenbehandlung von Zinksulfid mit Polyethersiloxanen war ein nasschemisch gefälltes Zinksulfid (sogenanntes *Sachtolith*), welches noch nicht trocken-vermahlen, d.h. z. B. dampfstrahlgemahlen, wurde. Dieses Pulver wurde mit der in Tabelle 4 angegebenen Menge an Polyethersiloxan versetzt und in einem Lödige-Mischer für 60 Sekunden homogenisiert. Danach wurde das mit Polyethersiloxan benetzte ZnS in einer Dampfstrahlmühle mit 10 bar Dampf trocken aufgemahlen. Alternativ kann die Aufmahlung mittels Stiftmühle, Luftstrahlmühle, Walzenmühle oder Kugelrohrmühle erfolgen.

V5: Behandlung von Lithopone-Partikeln in Trocken-Phase

Ausgangsmaterial für die trockene Oberflächenbehandlung von Lithopone mit Polyethersiloxanen war Lithopone, die in einer nasschemischen Co-Fällung von $BaSO_4$ und ZnS entstanden war und welche noch nicht trockenvermahlen, d.h. z. B dampfstrahlgemahlen, wurde. Dieses Pulver wurde mit der in Tabelle 4 angegebenen Menge an Polyethersiloxan versetzt und in einem Lödige-Mischer für 60 Sekunden homogenisiert. Danach wurde die mit Polyethersiloxan benetzte Lithopone in einer Dampfstrahlmühle mit 10 bar Dampf trocken aufgemahlen. Alternativ kann die Aufmahlung mittels Stiftmühle, Luftstrahlmühle, Walzenmühle oder Kugelrohrmühle erfolgen.

Die in Tabelle 4 aufgeführten Partikel P4, P7, P8, P9, P16, P18, P20, P21, P23, P24, P25, P26, P27 und P31 sind nicht erfindungsgemäß. P25A sind Titandioxid-Partikel mit anorganischer Nachbehandlung, welche Dampfstrahl behandelt worden sind, ohne eine organische oder erfindungsgemäße Oberflächenbehandlung. P25B sind Titandioxid-Partikel mit anorganischer Nachbehandlung, welche Dampfstrahl behandelt worden sind, mit Silikonöl Oberflächenbehandlung. P26 sind kommerzielle Rutilpigmente für Kunststoffanwendungen, hergestellt nach dem Sulfatverfahren, Ursprung: Europa

Tabelle 4: TiO2, BaSO4, ZnS und Lithopone Partikel die nach den Verfahren des Beispiels 3 oberflächenbehandelt wurden,

| Partikel | Methode | OberflächenBehandlungsmittel | Menge |
|---|---|---|---|
| P1 | V1 | O1 | 0,42 |
| P2 | V1 | O2 | 0,43 |
| P3 | V1 | O3 | 0,46 |
| P4 | V1 | O4 | 0,34 |
| P5 | V1 | O5 | 0,42 |
| P6 | V1 | O6 | 0,42 |
| P7 | V1 | O7 | 0,44 |
| P8 | V1 | O8 | 0,44 |
| P9 | V1 | O9 | 0,48 |
| P10 | V1 | O10 | 0,46 |
| P11 | V1 | O11 | 0,42 |
| P12A | V1 | O12 | 0,40 |
| P12B | V1 | O12 | 0,20 |
| P12C | V1 | O12 | 0,80 |
| P13 | V1 | O13 | 0,42 |
| P14 | V2 | O3 | 0,40 |
| P15 | V2 | O5 | 0,40 |
| P16 | V2 | O7 | 0,43 |
| P17 | V3 | O12 | 0,42 |
| P18 | V3 | TMP | 0,35 |
| P19 | V4 | O12 | 0,45 |
| P20 | V4 | AS | 0,45 |
| P21 | V4 | TMP | 0,35 |
| P22 | V5 | O12 | 0,42 |
| P23 | V5 | AS | 0,45 |
| P24 | V5 | TMP | 0,35 |
| P25A |  | keiner | 0 |
| P25B | V1 | Silikonöl | 0,41 |
| P26 |  | Silikonöl | 0,4 bis 0,5 |
| P27 | V1 | AS | 0,40 |
| P28 | V1 | O14 | 0,40 |
| P29 | V1 | O15 | 0,40 |
| P30 | V1 | O16 | 0,40 |

(fortgesetzt)

| Partikel | Methode | OberflächenBehandlungsmittel | Menge |
|---|---|---|---|
| P31 | V1 | O17 | 0,40 |

AS: kommerzielles Alkylsiloxan der Evonik Industries AG
TMP: Trimethylolpropan der BASF
Menge: Gew.-% Behandlungsmittel bezogen auf Masse der Partikel ohne erfindungsgemäße Oberflächenbehandlung.

*Beispiel 4: Eigenschaftsbestimmungen der oberflächenbehandelten Partikel*

E1: Staubbestimmung:

In einer Apparatur wie in Fig. 1 gezeigt wurden 100 g der zu prüfenden Substanz in die Fallbox 1) eingewogen. Die Fallbox wurde mit dem Hebel 2) verriegelt und in den Glaszylinder 3) (800 mm hoch, Durchmesser 150 mm) eingehängt. Das Probenröhrchen 6) wurde mit Quarzwatte gefüllt, ausgewogen und in den Glaszylinder 3) gesteckt. Das eine Ende des Probenröhrchens 6) wurde über den Schieber 4) verschlossen. Das andere Ende wurde über eine mit Quarzwatte gefüllte Waschflasche 7) durch einen Vakuumschlauch mit einer Vakuumpumpe 8) verbunden. Über eine weitere mit Quarzwolle gefüllte Sicherheitsflasche 9) wurde eine Gasuhr angeschlossen.

Die Fallbox 2) wurde entriegelt. Die Probe fiel in den Glaszylinder und es entwickelte sich Staub. Zehn Sekunden nach der Entriegelung mittels des Schiebers 4) die Gummidichtung 5) vom Eingang des Probenröhrchens entfernt. Die Fallbox wird vorsichtig entfernt. 20 sec. Nach öffnen des Schiebers wurde die Vakuumpumpe in Betrieb gesetzt und genau 20 l Luft durch den oben geöffneten Glaszylinder gesaugt. Die Leistung der Vakuumpumpe lag bei 10 l/min. Nach Abschalten der Vakuumpumpe wurde das eingewogene Proberöhrchen 6) entnommen und ausgewogen. Als Maß für den Staub wurde die Gewichtsdifferenz in [mg / 100 g] Pulver angegeben.

Die Bestimmung wurde als Doppelbestimmung durchgeführt. Die Mittelwerte dieser Messungen sind in Tabelle 5 angegeben.

Tabelle 5: Staubbestimmung nach Beispiel 4 der oberflächenbehandelten Partikel nach Beispiel 3

| Partikel | Staubmasse [mg/100g] |
|---|---|
| P1 | 33 |
| P2 | 29 |
| P3 | 46 |
| P4 | 120 |
| P5 | 68 |
| P6 | 59 |
| P7 | 95 |
| P8 | 86 |
| P9 | 86 |
| P10 | 37 |
| P11 | 46 |
| P12A | 61 |
| P12B | 36 |
| P12C | 75 |
| P13 | 45 |
| P14 | 51 |
| P15 | 63 |
| P16 | 77 |
| P17 | 8 |
| P18 | 84 |
| P19 | 45 |
| P20 | 96 |
| P21 | 89 |

(fortgesetzt)

| Partikel | Staubmasse [mg/100g] |
|---|---|
| P22 | 17 |
| P23 | 88 |
| P24 | 95 |
| P25A | 12 |
| P25B | 87 |
| P26 | 95 |
| P27 | 98 |
| P28 | 14 |
| P29 | 45 |
| P30 | 29 |
| P31 | 76 |

Die nicht erfindungsgemäßen Partikel weisen eine Staubmasse von mehr als 80mg/100g auf.

E6: Pulverfließfähigkeit

Die Bestimmung der Pulverfließfähigkeit erfolgt mit dem Ringschergerät RST -XS. Die Schüttgutprobe wird in die Meßzelle gefüllt und von oben über einen Deckel mit einer Kraft (Normalkraft)von 3,5 kPa belastet. Während der Messung rotiert die Scherzelle langsam ($\omega$). Der Deckel wird mit Hilfe von zwei Zugstangen am Drehen gehindert. Es entsteht eine Scherverformung der Schüttgutprobe. Die benötigte Kraft ($F_1$ und $F_2$) wird gemessen. Aus dem Verhältnis von Verfestigungsspannung $\sigma_1$ zu Schüttgutfestigkeit $\sigma_c$ wird die Fließfähigkeit $ff_c$ des Schüttgutes bestimmt.

Die Messergebnisse sind in Tabelle 6 dargestellt.

Je größer die Fließfähigkeit $ff_c$ ist, desto besser fließt das Schüttgut. Es werden folgende Bereiche unterschiedlicher Fließfähigkeit definiert (D. Schulze, Pulver und Schüttgüter, Springer, 2006, Kapitel 3.1.4, Seite 42):

$ff_c$ kleiner oder gleich 1, nicht fließend, verhärtet
$ff_c$ von größer 1 bis gleich 2, sehr kohäsiv (bis nicht fließend)
$ff_c$ von größer 2 bis gleich 4, kohäsiv
$ff_c$ von größer 4 bis gleich 10, leicht fließend
$ff_c$ größer 10, frei fließend.

Tabelle 6: Pulverfließfähigkeit $ff_c$ nach Beispiel 4 der oberflächenbehandelten Partikel nach Beispiel 3

| Partikel | ffc |
|---|---|
| P1 | 1,9 |
| P2 | 1,8 |
| P3 | 1,8 |
| P4 | 1,3 |
| P5 | 1,9 |
| P6 | 1,7 |
| P7 | 1,2 |
| P8 | 1,1 |
| P9 | 1,3 |
| P10 | 1,8 |
| P11 | 1,7 |
| P12A | 1,9 |
| P12B | 1,7 |
| P12C | 2,2 |
| P13 | 1,7 |
| P14 | 1,6 |
| P15 | 1,8 |

(fortgesetzt)

| Partikel | ffc |
|---|---|
| P16 | 1,5 |
| P17 | 2,3 |
| P18 | 1,4 |
| P19 | 1,9 |
| P20 | 1,3 |
| P21 | 1,4 |
| P22 | 1,7 |
| P23 | 1,3 |
| P24 | 1,5 |
| P25A | 1,0 |
| P25B | 1,4 |
| P26 | 1,3 |
| P27 | 1,4 |
| P28 | 2,0 |
| P29 | 1,8 |
| P30 | 1,6 |
| P31 | 1,5 |

Die nicht erfindungsgemäßen Partikel weisen eine Pulverfließfähigkeit von kleiner oder gleich 1,5 auf.

*Beispiel 5: Zusammensetzungen*

Z1: Masterbatches

Die Zusammensetzungen mit Thermoplasten werden auch als Masterbatche bezeichnet. Diese Masterbatche können nach der folgenden Vorschrift hergestellt werden.

Zunächst wurde ein Dryblend aus den zu untersuchenden oberflächenbehandelten Partikeln und Polyethylen als Beispiel eines Thermoplasten (LDPE: Lupolen Purell 1800 SP 15) in einer Konzentration von 50 Gew.-% hergestellt, indem beide Komponenten in eine Kunststoffflasche eingewogen und anschließend 15 min auf einem Topfroller vermischt wurden. Das resultierende Dryblend wurde anschließend in die Brabender Dosiereinheit gegeben und über eine Förderschnecke dem Doppelschneckenextruder Leistritz DS Extruder ZSE 18HP der Verarbeitung zugeführt. Mit einer Drehzahl von 150 Umdrehungen pro Minute (upm) und einer Temperatureinstellung von 150 °C in allen Zonen erfolgte die Verarbeitung zum Masterbatch. Der Polymerstrang wurde granuliert.

Nach dieser Vorschrift wurden die Zusammensetzungen Z1-P1 bis Z1-P27 hergestellt.

Z2: Weißpaste

Als Beispiel für Zusammensetzungen mit Weichmachern wurden Weißpasten hergestellt.

In einen 250 ml Dissolvertopf wurden 90 g Dioctylphthalat (DOP) eingewogen. Unter leichtem Rühren wurden mit einer 3 cm- Dissolverscheibe (ca. 5m/sec) innerhalb von drei min 167 g der oberflächenbehandelten Partikel portionsweise eingearbeitet. Der Dissolver wurde auf 12500 upm hochgefahren und fünf min dispergiert.

Nach dieser Vorschrift wurden die Zusammensetzungen Z2-P1 usw. Z2-P27 hergestellt.

Z3: Duromerzusammensetzungen

a: Konzentratpaste: Die Pigmente wurden im Trägerharz (einem ungesättigten Polyesterharz; SMC) mittels Dissolver vordispergiert. Die Konzentration der Pigmente in den Pasten lag bei 70 Gew.-%. Die Feindispergierung erfolgte über eine Perlmühle. (1 h Batchweise, Glasperlen 2 mm) Die Viskosität der Pasten lag bei ca. 0,6 Pa*s. Es wurden die Zusammensetzungen Z3a-P27 und Z3a-P12A hergestellt.

b: Halbzeuge: Die Rezepturbestandteile entsprechend Tabelle 7 wurden mittels Dissolver vermischt. Die Pastenviskosität lag im Bereich von 3 bis 20 Pa*s.

Tabelle 7: Zusammensetzungen der Pasten zur Herstellung von Halbzeugen, angegeben sind die Gewichtsteile deren Summe mehr als 100 betrug, Z3b-P27 ist nicht erfindungsgemäß

| Komponente | Funktion | Z3b-P27 | Z3b-P12 |
|---|---|---|---|
| Palapreg P17-02 | Polyesterharz | 70,0 | 70,0 |
| Palapreg H814-01 | Polyesterharz | 30,0 | 30,0 |
| TEGOMER DA626 | Dispergieradditiv | 1,5 | 1,5 |
| TEGOMER M-Si2650 | Prozessadditiv | 2,0 | 2,0 |
| Trigonox C | Initiator | 1,5 | 1,5 |
| Millicarb OG | Calciumcarbonat | 170,0 | 170,0 |
| Coathylene HA 1681 | Trennmittel | 5,0 | 5,0 |
| P12A | Partikel | 0 | 8,5 |
| P27 | Partikel | 8,5 | 0 |

Zur Herstellung der Halbzeuge wurden diese Harzsysteme zusammen mit 25 % Glasfasern (Vetrotex P204 2400 tex) zu Prepregs verarbeitet.

Verarbeitungsparameter Presse: Temperatur = 150 bis 155 °C, Druck = ca. 80 bar (1000 kN), Zeit = 150 bis 180 sec, Schließgeschwindigkeit = 8 mm/s.

*Beispiel 6: Prüfung der Dispergierbarkeit von oberflächenbehandelten Partikel*

E2: Prüfung der Masterbatches im Druckfiltertest

Die Bestimmung des Druckfilterwertes erfolgte mit dem Einschneckenextruder Brabender Plasti-Corder LAB Station (Schneckendurchmesser/-länge: 30 mm/25D). Es wurde ein Siebpaket der Fa. GKD mit einem PZ-Microdur 14 (Filterfeinheit 14 μm) und einem Stützgewebe mit 315 μm Maschenweite eingesetzt. Der Extruder wurde auf eine Temperatur von 200 °C aufgeheizt. Die Temperatur des Filterequipments wurde auf 230 °C eingestellt. Nach gründlichem Spülen des Extruders mit LDPE wurde die Filteraufnahme mit dem Siebpaket eingebaut. Nach Aufgabe des zu prüfenden Masterbatchgranulates und Austritt des pigmentierten Materials am Bypass, wurde der Schmelzestrom über das Siebpaket geleitet und die rechner-gestützte Messdatenerfassung gestartet. Die Messdaten wurden bis zum Erreichen eines maximalen Druckes von 150 bar oder aber bei geringem Druckanstieg bis zu einer Dauer von 60 Minuten registriert. Der Durchsatz lag bei 40 g/min.

Die Messergebnisse sind in Tabelle 8 dargestellt.

Das Maß für die Dispergierqualität ist der Druckfilterwert (DF), der nach folgender Formel berechnet wird:

$$DF = \frac{(p_{max} - p_0) \times F \times 100}{(t \times K \times G)} \qquad [bar \times cm^2 / g]$$

$p_{max}$: Enddruck [bar]
$p_0$: Anfangsdruck [bar]
F: Filterfläche = 6,16 $cm^2$
t: Messzeit [min]
K: Konzentration [Gew.-%] Pigment bezogen auf Gesamtzusammensetzung
G Durchsatz [g/min]

Tabelle 8: Druckfilterwerte gemäß Beispiel 6 (E2) von Zusammensetzungen gemäß Beispiel 5 (Z1)

| Zusammensetzungen | Druckfilterwert [bar * $cm^2$ / g] |
|---|---|
| Z1-P1 | 0,39 |
| Z1-P2 | 0,48 |
| Z1-P3 | 0,93 |
| Z1-P4 | 1,65 |
| Z1-P5 | 0,41 |
| Z1-P6 | 0,88 |
| Z1-P7 | 2,49 |
| Z1-P8 | 3,90 |
| Z1-P9 | 2,77 |
| Z1-P10 | 0,33 |
| Z1-P11 | 0,40 |
| Z1-P12A | 0,20 |
| Z1-P12B | 0,67 |
| Z1-P12C | 0,13 |
| Z1-P13 | 0,89 |
| Z1-P14 | 0,44 |
| Z1-P15 | 0,38 |
| Z1-P16 | 0,63 |
| Z1-P17 | 0,82 |
| Z1-P18 | 1,65 |
| Z1-P19 | 0,65 |
| Z1-P20 | 1,79 |
| Z1-P21 | 4,23 |
| Z1-P22 | 0,38 |
| Z1-P23 | 1,10 |
| Z1-P24 | 5,33 |
| Z1-P25A | 6,55 |
| Z1-P25B | 3,70 |
| Z1-P26 | 2,38 |
| Z1-P27 | 1,06 |
| Z1-P28 | 0,45 |
| Z1-P29 | 0,87 |
| Z1-P30 | 1,79 |
| Z1-P31 | 1,91 |

Je geringer der Druckfilterwert desto besser ist die Dispergierung des Pigmentes im Polymer. Druckfilterwerte ≥ 1 bar*$cm^2$/g zeigen eine mangelnde Dispergierfähigkeit an.

E3: Prüfung der Masterbatches in Polymer Flachfolien:

Die Masterbatche gemäß Beispiel 5 (Z1) wurden nach folgendem Verfahren zu Folien extrudiert. Dazu wurden die Masterbatche mit LDPE-Granulat (Purell PE 3020H) auf eine Konzentration von 10 Gew.-% Pigment verdünnt. Hierzu wurden Masterbatch und Polymergranulat in eine Kunststoffflasche gegeben und von Hand ½ min geschüttelt. Danach wurde die Probe auf dem Einschneckenextruder Brabender Plasti-Corder LAB Station (Schneckendurchmesser/-länge: 30 mm/25D) mit 15 upm und einer Temperatur von 190 °C extrudiert. Über eine Breitschlitzdüse wurde eine ca. 8 cm breite Folie ausgetragen. Der Folienstrang wurde über ein Förderband abgezogen, abgekühlt und aufgerollt.

Aus dem Folienstrang wurden 5 etwa 50 cm lange Stücke begutachtet. Die Beurteilung erfolgte im Durchlicht hinsichtlich der Anzahl undispergierter Agglomerate bei zwei unterschiedlichen Vergrößerungen (0 mal: keine Vergrößerung; 30 mal: bei dreißigfacher Vergrößerung). Dabei hatte die Größe der Stippen, welche aus nicht vollständig dispergierten Agglomeraten bestehen, keinen Einfluss auf die Benotung.

Die Ergebnisse wurden in einem fünfstufigen System benotet, wobei Note 1 keine Stippen, Note 2 vereinzelte

Stippen (es gab Prüfflächen mit 1 bis 2 Stippen aber auch Prüfflächen ohne Stippen), Note 3 mäßige Anzahl von Stippen (alle Prüfflächen hatten Stippen, im Durchschnitt lagen diese bei unter 5 pro Prüffläche), Note 4 viele Stippen (alle Prüfflächen wiesen 5 bis 10 Stippen auf) und Note 5 sehr viele Stippen (im Durchschnitt hatten alle Prüfflächen mind. 10 Stippen).

Die Werte der Tabelle 9 ergeben sich als Note der Auszählung von 5 Prüfflächen.

Ab Note 3 sind die Masterbatche zur Herstellung von Folien ungeeignet. Hierbei wird zunächst ohne Vergrößerung beurteilt.

Tabelle 9: Benotung der Prüfflächen gemäß Beispiel 6 (E3) ausgehend von Zusammensetzungen gemäß Beispiel 5 (Z1)

| Zusammensetzungen | ohne Vergrößerung | mit 30-facher Vergrößerung |
|---|---|---|
| Z1-P1 | 1,5 | 2,5 |
| Z1-P2 | 1,5 | 2,5 |
| Z1-P3 | 2 | 3 |
| Z1-P4 | 1,5 | 2,5 |
| Z1-P5 | 1,5 | 2,5 |
| Z1-P6 | 1,5 | 2,5 |
| Z1-P7 | 2,5 | 3 |
| Z1-P8 | 1,5 | 2,5 |
| Z1-P9 | 2,5 | 3,5 |
| Z1-P10 | 2,5 | 4 |
| Z1-P11 | 2,5 | 3,5 |
| Z1-P12A | 2 | 3 |
| Z1-P12B | 2,5 | 3 |
| Z1-P12C | 1,5 | 2 |
| Z1-P13 | 1 | 2,5 |
| Z1-P14 | 1,5 | 2,5 |
| Z1-P15 | 1 | 1 |
| Z1-P16 | 1 | 1 |
| Z1-P17 | 1,5 | 1,5 |
| Z1-P18 | 2 | 2 |
| Z1-P19 | 1,5 | 2 |
| Z1-P20 | 2 | 2,5 |
| Z1-P21 | 3,5 | 4 |
| Z1-P22 | 1,5 | 1,5 |
| Z1-P23 | 2,5 | 3 |
| Z1-P24 | 3,5 | 4 |
| Z1-P25A | 4 | 4 |
| Z1-P25B | 2 | 2,5 |
| Z1-P26 | 1,5 | 2,5 |
| Z1-P27 | 2 | 2 |

E4: Prüfung in Weichmachern

3 g der hergestellten Weißpasten gemäß Beispiel 5 (Z2) wurden in einem Kunststoffbecher mit der gleichen Menge DOP mit dem Spatel gut verrührt. Zur Bestimmung der Feinheit wurde die verdünnte Paste auf dem Hegmankeil (Grindometer) zunächst auf dem Hegmannkeil 0 bis 100 μm aufgezogen und dann die entsprechend feinen Proben auf dem Hegmannkeil 0 bis 25 μm (Fa. Erichsen) aufgezogen. Die visuell ermittelten Feinheitswerte in μm wurden notiert und sind in Tabelle 10 dargestellt.

Eine Feinheit von größer 20 μm zeigt eine mangelhafte Dispergierung.

Tabelle 10: Bestimmung der Feinheit gemäß Beispiel 6 (E4) von Zusammensetzungen gemäß Beispiel 5 (Z2)

| Zusammensetzungen | Feinheit [μm] |
|---|---|
| Z2-P1 | 15 |
| Z2-P2 | 13 |
| Z2-P3 | 50 |
| Z2-P4 | 30 |
| Z2-P5 | 20 |
| Z2-P6 | 15 |
| Z2-P7 | 22 |
| Z2-P8 | 24 |
| Z2-P9 | 65 |
| Z2-P10 | 12 |
| Z2-P11 | 18 |
| Z2-P12A | 17 |
| Z2-P12B | 19 |
| Z2-P12C | 16 |
| Z2-P13 | 19 |
| Z2-P14 | 15 |
| Z2-P15 | 16 |
| Z2-P16 | 17 |
| Z2-P17 | 19 |
| Z2-P18 | 22 |
| Z2-P19 | 8 |
| Z2-P20 | 26 |
| Z2-P21 | > 100 |
| Z2-P22 | 9 |
| Z2-P23 | > 100 |
| Z2-P24 | > 100 |
| Z2-P25A | > 100 |
| Z2-P25B | 50 |
| Z2-P26 | 22 |
| Z2-P27 | 35 |
| Nicht messbar: >100 | |

E5: Eigenschaften der Halbzeuge nach Beispiel 5 (Z3b)

Probenkörper wurden aus dem Halbzeug ausgesägt. Unter Verwendung einer Schablone wurde aus der Mitte des Prepregs senkrecht zur Fahrtrichtung des Prepregs ein Stück mit folgenden Maßen ausgesägt: 27 cm x 38 cm. Die Platte wies eine Stärke von 4 mm auf.

Für die anschließenden mechanischen Prüfungen wurden 10 cm breite Streifen quer zur Fahrtrichtung des Prepregs aus den Probenkörpern geschnitten. Für die Schlagzähigkeitsprüfung wurden Prüfkörper mit der Länge von 80 mm ausgesägt. Für die Zugversuche waren die Prüfkörper 170 mm lang. Sämtliche Prüfkörper wurden mit Leitungswasser abgespült, mit einem Tuch abgetrocknet und für mindestens 24 h im Klimaraum gelagert.

Die Zugfestigkeit erfolgte mittels Zugprüfgerät der Fa. Frank/Zwick (23°C, 50% rel. Luftfeuchtigkeit). Die Maschinenparameter waren Vorkraft = 20 N, Geschwindigkeit bis Vorkraft = 1 mm/min, Prüfgeschwindigkeit = 5 mm/min, Einspannlänge = 120 mm und Messlänge des Incrementalen Aufnehmers = 80 mm.

Schlagzähigkeit (Charpy):

Die Prüfungen wurden mit einem 5 J Schlagpendel nach ISO 179 durchgeführt.

Tabelle 11: Ergebnisse der mechanischen Prüfungen nach Beispiel 6 (E5) der Halbzeuge nach Beispiel 5 (Z3b)

| | Zugfestigkeit [MPa] | Schlagzähigkeit [kJ/$m^2$] |
|---|---|---|
| Z3b-P27 | 63,1 | 47,9 |
| Z3b-P12A | 71,6 | 59,3 |
| Z3b-P28 | 71,4 | 60,1 |
| Z3b-P29 | 72,6 | 58,9 |

Gegenüber dem nicht erfindungsgemäßen Beispiel ist die deutliche Erhöhung der Zugfestigkeit (um mindestens 11%) und der Schlagzähigkeit (um mindestens 18%) bei Verwendung der erfindungsgemäßen Partikel zu beobachten.

**Patentansprüche**

1. Oberflächenbehandelte $TiO_2$, $BaSO_4$, ZnS und/oder Lithopone-Partikel erhältlich nach einem Verfahren zur Oberflächenbehandlung von Primärpartikeln **dadurch gekennzeichnet, dass** die Primärpartikel bei der Behandlung mit mindestens einer Verbindung der Formel (I)

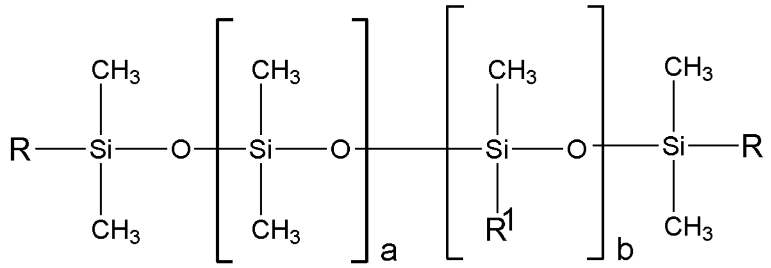

(I)

mit

R gleich oder verschieden $R^1$, Methyl oder Hydroxy
$R^1$ gleich oder verschieden einem Polyetherrest der Formel (III) ist

$$-Z-(O-C_mH_{2m-(n-1)})_o-[O-(AO)-R^3]_n \quad \text{(III)}$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3
n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,

und mit der Maßgabe, dass in $R^1$ die Summe aus Kohlenstoff- und Sauerstoffatomen mindestens 70 ist,
a 20 bis 200, bevorzugt von 30, von 40, von 50, von 60 bis 170, bis 160, bis 150, bis 140, bis 130, bis 120, bis 110 und insbesondere bevorzugt 70 bis 100,
b 1 bis 50, bevorzugt von 2, von 3, von 4 bis 30, bis 25, bis 20 und insbesondere bevorzugt 5 bis 15,
mit der Maßgabe, dass wenn keiner der Reste R gleich $R^1$ ist, b mindestens 3 ist, in Kontakt gebracht werden, wobei die Verbindungen der Formel (I) mit einem Anteil von 0,01 bis 2 Gew.-%, bevorzugt 0,05 bis 1 Gew.-%, mehr bevorzugt 0,1 bis 0,8 Gew.-%, weiter mehr bevorzugt 0,2 bis 0,6 Gew.-% und insbesondere bevorzugt 0,3 bis 0,5 Gew.-% bezogen auf die Masse der zu behandelnden Primärpartikel eingesetzt werden

2. Partikel nach Anspruch 1 **dadurch gekennzeichnet, dass**

$R^1$ gleich oder verschieden ein $-(CH_2)_p-O-EO_x-PO_y-BO_z--R^3$,
mit der Maßgabe, dass in $R^1$ die Summe aus Kohlenstoff- und Sauerstoffatomen mindestens 70 ist,
EO Oxyethylen,
PO Oxypropylen,
BO Oxybutylen
x 0 bis 20, bevorzugt 3 bis 15, insbesondere bevorzugt 4 bis 10,
y 5 bis 100, bevorzugt 8 bis 50, insbesondere bevorzugt 10 bis 30,
z 0 bis 20,
p gleich 2 bis 4, bevorzugt 2 und/oder 3,
und $R^3$ wie in Anspruch 1 definiert ist.

**3.** Partikel nach einem der Ansprüche 1 oder 2 **dadurch gekennzeichnet, dass** das numerische Verhältnis von Index a zu Index b gleich 8 bis 18, bevorzugt 9 bis 15 und insbesondere 10 bis 12 ist.

**4.** Partikel nach einem der Ansprüche 2 oder 3 **dadurch gekennzeichnet, dass** der Index x zwischen 0,05 und 1,2 mal der Summe der Indices (y + z), bevorzugt zwischen 0,07 und 0,8 mal, insbesondere zwischen 0,1 und 0,5 mal.

**5.** Partikel nach Anspruch 2 **dadurch gekennzeichnet, dass**

R gleich Methyl,
a 80 bis 95,
b 5 bis 8,
$R^3$ Wasserstoff
x 3 bis 5,
y 10 bis 25,
z 0

**6.** Partikel nach einem der Ansprüche 1 bis 5 **dadurch gekennzeichnet, dass** die Partikel $TiO_2$ sind.

**7.** Partikel nach einem der Ansprüche 1 bis 6 **dadurch gekennzeichnet, dass** sie einen Staubwert von höchstens 80 mg pro 100 g oberflächenbehandelte Partikel aufweisen.

**8.** Verfahren zur Oberflächenbehandlung von $TiO_2$, $BaSO_4$, ZnS und/oder Lithopone-Partikel **dadurch gekennzeichnet, dass** die Primärpartikel bei der Behandlung mit mindestens einer Verbindung der Formel (I)

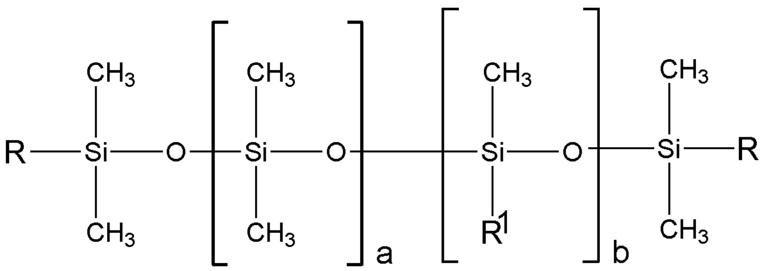

(I)

mit

R gleich oder verschieden $R^1$, Methyl oder Hydroxy
$R^1$ gleich oder verschieden einem Polyetherrest der Formel (III) ist

$$-Z-(O-C_mH_{2m-(n-1)})_o-[O-(AO)-R^3]_n \qquad (III)$$

mit

Z gleich einem verzweigten oder unverzweigten Alkylenrest mit 2 bis 4 Kohlenstoffatomen, bevorzugt 3 Kohlenstoffatomen
m 2 bis 4, bevorzugt 3

n 1 bis 3, bevorzugt 1 oder 2, insbesondere bevorzugt 1
o 0 oder 1, bevorzugt 0
AO gleich oder verschieden einem Oxyalkylenrest enthaltend Oxyethylen-, Oxypropylen- und/oder Oxybutylenreste,
$R^3$ gleich oder verschieden Wasserstoff, ein Alkylrest mit 1 bis 4 Kohlenstoffatomen,

und mit der Maßgabe, dass in $R^1$ die Summe aus Kohlenstoff- und Sauerstoffatomen mindestens 70 ist,
a 20 bis 200
b 1 bis 50,
mit der Maßgabe, dass wenn keiner der Reste R gleich $R^1$ ist, b mindestens 3 ist,
in Kontakt gebracht werden, wobei die Verbindungen der Formel (I) mit einem Anteil von 0,01 bis 2 Gew.-% bezogen auf die Masse der zu behandelnden Primärpartikel eingesetzt werden.

**9.** Verwendung der Partikel nach mindestens einem der Ansprüche 1 bis 8 zur Herstellung von Polymerzusammensetzungen.

**10.** Verwendung nach Anspruch 9 **dadurch gekennzeichnet, dass** die Polymerzusammensetzungen zu Kunststoffformkörpern oder -folien verarbeitet werden.

**11.** Zusammensetzungen enthaltend ein Polymer **dadurch gekennzeichnet, dass** sie einen Partikel nach mindestens einem der Ansprüche 1 bis 8 enthalten.

**12.** Zusammensetzung nach Anspruch 11 **dadurch gekennzeichnet, dass** das Polymer ein Duromer oder Thermoplast ist.

**13.** Zusammensetzungen nach mindestens einem der Ansprüche 10 oder 11 **dadurch gekennzeichnet, dass** die Zusammensetzung ein Masterbatch, ein Kunststoffformkörper oder eine Kunststofffolie ist.

## Claims

**1.** Surface-treated $TiO_2$, $BaSO_4$, ZnS, and/or lithopone particle obtainable by a process for the surface treatment of primary particles, **characterized in that** during the treatment the primary particles are brought into contact with at least one compound of the formula (I)

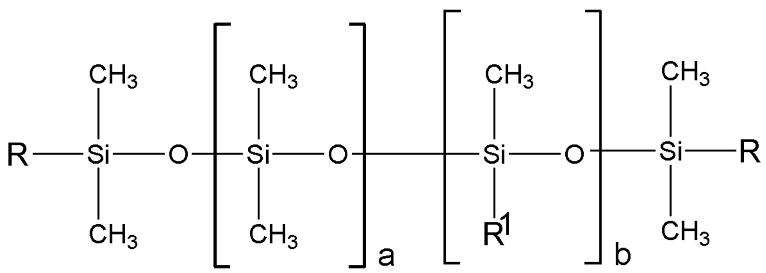

(I)

where

R identically or differently is $R^1$, methyl, or hydroxy
$R^1$ identically or differently is a polyether moiety of the formula (III)

$$-Z-(O-C_mH_{2m-(n-1)})_o-[O-(AO)-R^3]_n \qquad (III)$$

where

Z is a branched or unbranched alkylene moiety having from 2 to 4 carbon atoms, preferably 3 carbon atoms,
m is from 2 to 4, preferably 3,
n is from 1 to 3, preferably 1 or 2, with particular preference 1,

o is 0 or 1, preferably 0,
AO identically or differently is an oxyalkylene moiety comprising oxyethylene, oxypropylene, and/or oxybutylene moieties,
$R^3$ identically or differently is hydrogen or an alkyl moiety having from 1 to 4 carbon atoms,

with the proviso that in $R^1$ the total number of carbon atoms and oxygen atoms is at least 70,
a is from 20 to 200, preferably from 30, from 40, from 50, or from 60 to 170, to 160, to 150, to 140, to 130, to 120, or to 110, and with particular preference from 70 to 100,
b is from 1 to 50, preferably from 2, from 3 or from 4 to 30, to 25, or to 20, and with particular preference from 5 to 15, with the proviso that if none of the moieties R is $R^1$, b is at least 3,
where the proportion used of the compounds of the formula (I) is from 0.01 to 2% by weight, preferably from 0.05 to 1% by weight, more preferably from 0.1 to 0.8% by weight, still more preferably from 0.2 to 0.6% by weight, and with particular preference from 0.3 to 0.5% by weight, based on the mass of the primary particles to be treated.

2. Particle according to Claim 1, **characterized in that** $R^1$ identically or differently is

$$-(CH_2)_p\text{-O-EO}_x\text{-PO}_y\text{-BO}_z\text{--}R^3,$$

with the proviso that in $R^1$ the total number of carbon atoms and oxygen atoms is at least 70,

EO is oxyethylene,
PO is oxypropylene,
BO is oxybutylene,
x is from 0 to 20, preferably from 3 to 15, with particular preference from 4 to 10,
y is from 5 to 100, preferably from 8 to 50, with particular preference from 10 to 30,
z is from 0 to 20,
p is from 2 to 4, preferably 2 and/or 3,
and $R^3$ is as defined in claim 1.

3. Particle according to either of Claims 1 and 2, **characterized in that** the numeric ratio of index a to index b is from 8 to 18, preferably from 9 to 15, and in particular from 10 to 12.

4. Particle according to either of Claims 2 and 3, **characterized in that** the index x is between 0.05 and 1.2 times the sum of the indices (y + z), preferably between 0.07 and 0.8 times, in particular between 0.1 and 0.5 times.

5. Particle according to Claim 2, **characterized in that**

R is methyl,
a is from 80 to 95,
b is from 5 to 8,
$R^3$ is hydrogen,
x is from 3 to 5,
y is from 10 to 25,
z is 0.

6. Particle according to any of Claims 1 to 5, **characterized in that** the particle is $TiO_2$.

7. Particle according to any of Claims 1 to 6, **characterized in that** its dust value is at most 80 mg per 100 g of surface-treated particles.

8. Process for the surface treatment of $TiO_2$, $BaSO_4$, ZnS, and/or lithopone particles, **characterized in that** during the treatment the primary particles are brought into contact with at least one compound of the formula (I)

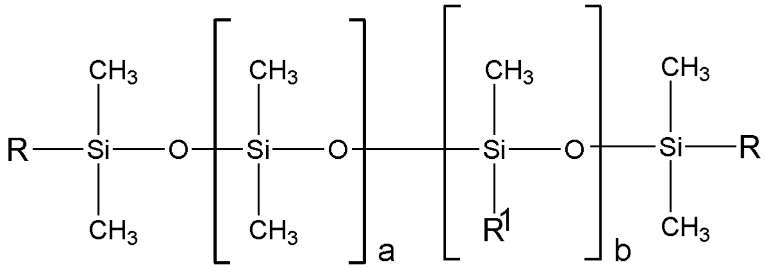

(I)

where

R identically or differently is $R^1$, methyl, or hydroxy
$R^1$ identically or differently is a polyether moiety of the formula (III)

$$-Z-(O-C_mH_{2m-(n-1)})_o-[O-(AO)-R^3]_n \qquad (III)$$

where

Z is a branched or unbranched alkylene moiety having from 2 to 4 carbon atoms, preferably 3 carbon atoms,
m is from 2 to 4, preferably 3,
n is from 1 to 3, preferably 1 or 2, with particular preference 1,
o is 0 or 1, preferably 0,
AO identically or differently is an oxyalkylene moiety comprising oxyethylene, oxypropylene, and/or oxybutylene moieties,
$R^3$ identically or differently is hydrogen or an alkyl moiety having from 1 to 4 carbon atoms,

with the proviso that in $R^1$ the total number of carbon atoms and oxygen atoms is at least 70,
a is from 20 to 200,
b is from 1 to 50,
with the proviso that if none of the moieties R is $R^1$, b is at least 3,
where the proportion used of the compounds of the formula (I) is from 0.01 to 2% by weight, based on the mass of the primary particles to be treated.

**9.** Use of the particles according to at least one of Claims 1 to 8 for the production of polymer compositions.

**10.** Use according to Claim 9, **characterized in that** the polymer compositions are processed to give plastics moldings or plastics films.

**11.** Composition comprising a polymer, **characterized in that** it comprises a particle according to at least one of Claims 1 to 8.

**12.** Composition according to Claim 11, **characterized in that** the polymer is a thermoset or thermoplastic.

**13.** Composition according to at least one of Claims 10 and 11, **characterized in that** the composition is a masterbatch, a plastics molding, or a plastics film.

## Revendications

**1.** Particules de $TiO_2$, $BaSO_4$, ZnS et/ou lithopone traitées en surface, pouvant être obtenues par un procédé de traitement de surface de particules primaires, **caractérisées en ce que** les particules primaires sont mises en contact lors du traitement avec au moins un composé de formule (I)

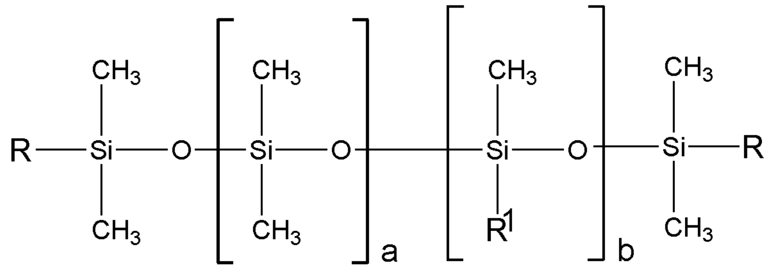

(I)

dans laquelle

les R représentent, de manière identique ou différente, $R^1$, méthyle ou hydroxy,
les $R^1$ représentent, de manière identique ou différente, un radical polyéther de formule (III)

$$-Z-(O-C_mH_{2m-(n-1)})_o-[O-(AO)-R^3]_n \qquad (III)$$

dans laquelle

Z représente un radical alkylène ramifié ou non ramifié de 2 à 4 atomes de carbone, de préférence de 3 atomes de carbone,
m représente 2 à 4, de préférence 3,
n représente 1 à 3, de préférence 1 ou 2, de manière particulièrement préférée 1,
o représente 0 ou 1, de préférence 0,
les AO représentent, de manière identique ou différente, un radical oxyalkylène contenant les radicaux oxyéthylène, oxypropylène et/ou oxybutylène,
les $R^3$ représentent, de manière identique ou différente, l'hydrogène, un radical alkyle de 1 à 4 atomes de carbone,

et à condition que, dans $R^1$, la somme des atomes de carbone et d'oxygène soit d'au moins 70,
a vaut de 20 à 200, de préférence de 30, de 40, de 50, de 60 à 170, à 160, à 150, à 140, à 130, à 120, à 110, et de manière particulièrement préférée de 70 à 100,
b vaut de 1 à 50, de préférence de 2, de 3, de 4 à 30, à 25, à 20, et de manière particulièrement préférée de 5 à 15,
à condition que lorsqu'aucun des radicaux R ne représente $R^1$, b vaille au moins 3,
les composés de formule (I) étant utilisés en une proportion de 0,01 à 2 % en poids, de préférence de 0,05 à 1 % en poids, de manière davantage préférée de 0,1 à 0,8 % en poids, de manière encore davantage préférée de 0,2 à 0,6 % en poids et de manière particulièrement préférée de 0,3 à 0,5 % en poids, par rapport à la masse des particules primaires à traiter.

2. Particules selon la revendication 1, **caractérisées en ce que**
les $R^1$ représentent, de manière identique ou différente, un $-(CH_2)_p-O-EO_x-PO_y-BO_z--R^3$,
à condition que, dans $R^1$, la somme des atomes de carbone et d'oxygène soit d'au moins 70,
EO représente oxyéthylène,
PO représente oxypropylène,
BO représente oxybutylène,
x vaut de 0 à 20, de préférence de 3 à 15, de manière particulièrement préférée de 4 à 10,
y vaut de 5 à 100, de préférence de 8 à 50, de manière particulièrement préférée de 10 à 30,
z vaut de 0 à 20,
p vaut de 2 à 4, de préférence 2 et/ou 3,
et $R^3$ est tel que défini dans la revendication 1.

3. Particules selon l'une quelconque des revendications 1 ou 2, **caractérisées en ce que** le rapport numérique entre l'indice a et l'indice b est de 8 à 18, de préférence de 9 à 15 et notamment de 10 à 12.

4. Particules selon l'une quelconque des revendications 2 ou 3, **caractérisées en ce que** l'indice x est compris entre 0,05 et 1,2 fois la somme des indices (y + z), de préférence entre 0,07 et 0,8 fois, notamment entre 0,1 et 0,5 fois.

**5.** Particules selon la revendication 2, **caractérisées en ce que**

les R représentent méthyle,
a vaut 80 à 95,
b vaut 5 à 8,
$R^3$ représente hydrogène,
x vaut 3 à 5,
y vaut 10 à 25,
z vaut 0.

**6.** Particules selon l'une quelconque des revendications 1 à 5, **caractérisées en ce que** les particules sont du $TiO_2$.

**7.** Particules selon l'une quelconque des revendications 1 à 6, **caractérisées en ce qu'**elles présentent une valeur de poussière d'au plus 80 mg par 100 g de particules traitées en surface.

**8.** Procédé de traitement de surface de particules de $TiO_2$, $BaSO_4$, ZnS et/ou lithopone, **caractérisé en ce que** les particules primaires sont mises en contact lors du traitement avec au moins un composé de formule (I)

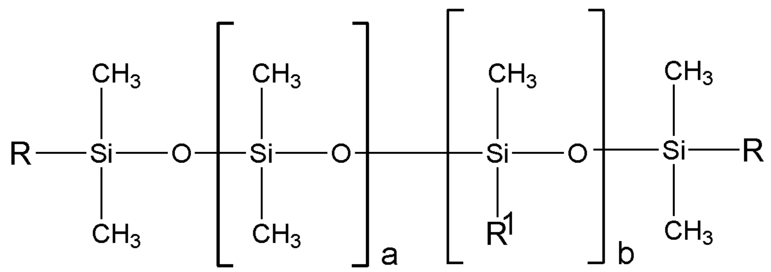

(I)

dans laquelle

les R représentent, de manière identique ou différente, $R^1$, méthyle ou hydroxy,
les $R^1$ représentent, de manière identique ou différente, un radical polyéther de formule (III)

$$-Z-(O-C_mH_{2m-(n-1)})_o-[O-(AO)-R^3]_n \qquad \text{(III)}$$

dans laquelle

Z représente un radical alkylène ramifié ou non ramifié de 2 à 4 atomes de carbone, de préférence de 3 atomes de carbone,
m représente 2 à 4, de préférence 3,
n représente 1 à 3, de préférence 1 ou 2, de manière particulièrement préférée 1,
o représente 0 ou 1, de préférence 0,
les AO représentent, de manière identique ou différente, un radical oxyalkylène contenant les radicaux oxyéthylène, oxypropylène et/ou oxybutylène,
les $R^3$ représentent, de manière identique ou différente, l'hydrogène, un radical alkyle de 1 à 4 atomes de carbone,

et à condition que, dans $R^1$, la somme des atomes de carbone et d'oxygène soit d'au moins 70,
a vaut 20 à 200,
b vaut de 1 à 50,
à condition que lorsqu'aucun des radicaux R ne représente $R^1$, b vaille au moins 3,
les composés de formule (I) étant utilisés en une proportion de 0,01 à 2 % en poids, par rapport à la masse des particules primaires à traiter.

**9.** Utilisation des particules selon au moins l'une quelconque des revendications 1 à 8 pour la fabrication de compositions polymères.

**10.** Utilisation selon la revendication 9, **caractérisée en ce que** les compositions polymères sont transformées en corps

moulés ou films en matière plastique.

**11.** Compositions contenant un polymère, **caractérisées en ce qu'**elles contiennent une particule selon au moins l'une quelconque des revendications 1 à 8.

**12.** Composition selon la revendication 11, **caractérisée en ce que** le polymère est un duromère ou un thermoplastique.

**13.** Compositions selon au moins l'une quelconque des revendications 10 ou 11, **caractérisées en ce que** la composition est un mélange maître, un corps moulé en matière plastique ou un film en matière plastique.

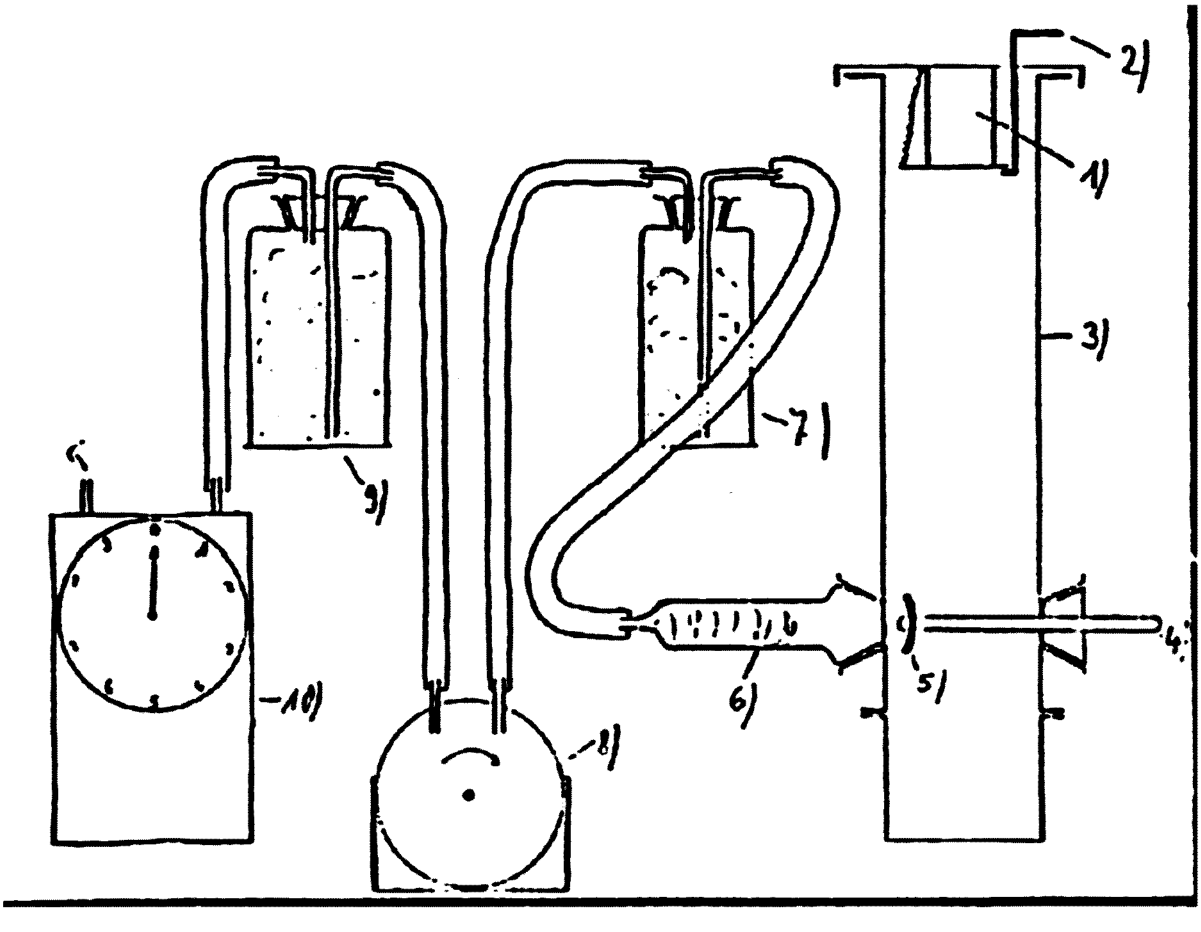


Figur 1

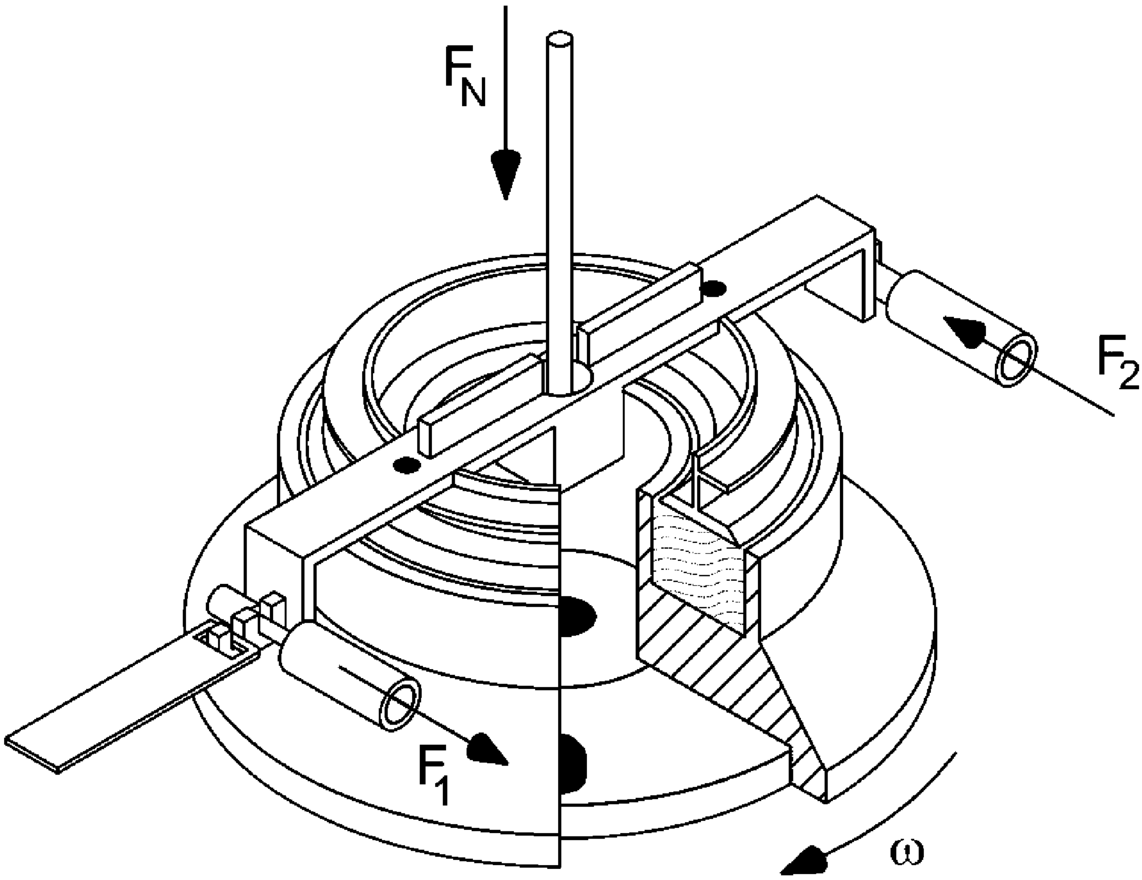


Figur 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 1288581 A
- US 3649321 A
- DE 4140793
- EP 0546407 A
- EP 0546406 A
- EP 0141174 A1
- HU 216858 B
- EP 0265807 A2
- GB 1348372 A
- EP 0093310 A
- DE 2555048
- EP 1132417 A
- EP 1520870 A
- EP 1439200 A
- DE 102007057145


### In der Beschreibung aufgeführte Nicht-Patentliteratur


- Thermoplaste. **CARLOWITZ U. WIERER.** RÖMPP ONLINE. Springer Verlag, 1987, 95 ff
- RÖMPP ONLINE. **BECKER, G. W. ; BRAUN, D. ; WOEBCKEN, W.** Kunststoff-Handbuch. Hanser: München, 1988, vol. 10
- **GILBERT, VARSHNEY ; VAN SOOM UND SCHILLER.** Plate-out in PVC Extrusion - I. Analysis of plate-out. *Journal of Vinyl and Additive Technology,* 2008, vol. 1 (14), 3-9
- **JAN C. J. BART.** Plastics Additives: Advanced Industrial Analysis. IOC Press, 2006, 419-420
- *Broschüre Trouble Shouting Guide-Siegwerk,* Marz 2013
- **J. WINKLER.** Titandioxid. 2003, 38-41
- **D. SCHULZE.** Pulver und Schüttgüter. Springer, 2006, 42
- **A. BRANDOLINI ; D. HILLS.** NMR Spectra of Polymers and Polymer Additives. Marcel Dekker, Inc, 2000